# EUROPEAN PATENT SPECIFICATION

(11) **EP 3 901 801 B1**
(45) Date of publication and mention of the grant of the patent: **14.09.2022**
(21) Application number: 21160695.9
(22) Date of filing: 04.03.2021
(51) Int. Cl.: G06F 21/55, G06F 3/06, G06F 11/34, G06F 21/64, G06F 21/79, G06Q 20/42, G07C 9/22, H04L 9/32, G06Q 20/38

(54) **DIGITAL SIGNATURE MANAGEMENT METHOD AND DIGITAL SIGNATURE MANAGEMENT SYSTEM**
VERFAHREN ZUR VERWALTUNG DIGITALER UNTERSCHRIFTEN UND SYSTEM ZUR VERWALTUNG DIGITALER UNTERSCHRIFTEN
MÉTHODE DE GESTION DES SIGNATURES NUMÉRIQUES ET SYSTÈME DE GESTION DES SIGNATURES NUMÉRIQUES

(30) Priority: 20.04.2020 JP 2020074817
(43) Date of publication of application: 27.10.2021
(73) Proprietor: Hitachi, Ltd., Tokyo 100-8280 (JP)
(72) Inventor: SAKAZAKI, Hisao, Tokyo, 100-8280 (JP); OTAHARA, Chiaki, Tokyo, 100-8280 (JP); HINO, Kazuhiko, Tokyo, 100-8280 (JP)
(74) Representative: Manitz Finsterwald Patent- und Rechtsanwaltspartnerschaft mbB

(56) References cited:
- CN-A- 109 542 979
- KR-A- 20200 013 886
- US-A1- 2019 325 038

## Description

### BACKGROUND

The present invention relates to a digital signature management method and a digital signature management system.

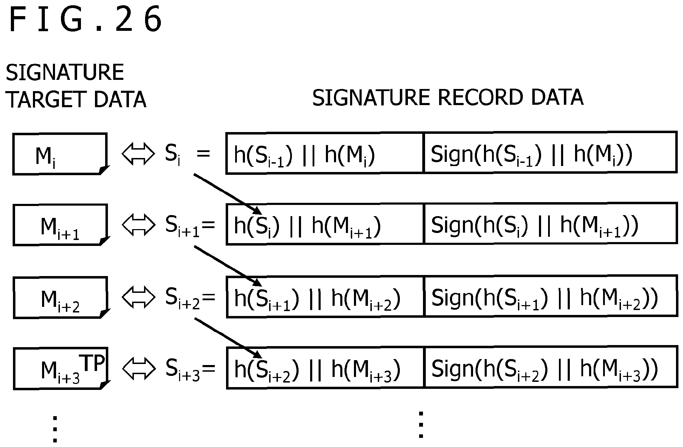

A digital signature is widely used as a technique for guaranteeing authenticity of electronic data. Long-term storage of electronic data has a known problem in that the expiration time of the digital signature comes in three to five years. A technique illustrated in FIG. 26 is known as a technique for solving this problem. In the example illustrated in FIG. 26, items of signature target data, Mᵢ, Mᵢ₊₁, Mᵢ₊₂, and Mᵢ₊₃, are generated in chronological order in the order named, and corresponding items of signature record data, Sᵢ, Sᵢ₊₁, Sᵢ₊₂, and Sᵢ₊₃, are generated. In the generation of each item of signature record data, it is first checked that an immediately previous item of data has not been altered. For example, in the generation of the signature record data Sᵢ₊₁, it is checked that signature record data corresponding to the signature target data Mᵢ₊₁ is Sᵢ.

Then, a hash value of this signature record data is calculated, and a signature is added to data made up of a combination of the hash value of the immediately previous item of signature record data and a hash value of a current item of signature target data. According to this technique, each item of signature record data necessarily includes the hash value of the immediately previous item of signature record data, and this makes a hash chain of the signature record data. This hash chain enables a hash value of signature target data guaranteed by past signature record data to be guaranteed by the latest signature record data as well by tracing the hash chain. That is, authenticity of past data even with an expired signature can be guaranteed by an unexpired signature.

PCT Patent Publication No. WO 2008/026238 discloses a data processing system that uses a first storage device and a second storage device, in which hash values are added to data outputted sequentially, and the data with the hash values added thereto is stored in the second storage device, the data processing system including: a hash value duplicate storage section that, every time data is stored in the second storage device, duplicates a first hash value generated from the stored data and a second hash value generated from a hash value of data stored before the stored data, the first and second hash values being added to the stored data stored in the second storage device, and stores duplicates of the first hash value and the second hash value in the first storage device; a hash value comparison section that, when new data has been outputted, compares the last first hash value and second hash value added to the last data stored last in the second storage device with duplicates of the last first hash value and second hash value stored in the first storage device; a hash value generation section that generates a new first hash value from the new data, and generates a new second hash value from the last first hash value and second hash value, when the hash value comparison section has determined that the last first hash value and second hash value coincide with the duplicates of the last first hash value and second hash value; and a data storage section that adds the new first hash value and the new second hash value generated by the hash value generation section to the new data, and stores the new data with the new first hash value and the new second hash value added thereto in the second storage device.

There is a need to delete signature target data for which the retention term has expired and which no longer needs to be retained, in order to save the storage space of a storage device when there are a large number of items of signature target data. However, related-art techniques have a problem in that deletion of at least one item of signature target data and signature record data may make tracing of the chain of hash values impossible, making it impossible to verify authenticity of data that is previous to the deleted data and for which the expiration time of a signature has passed. This problem will now be described specifically below with reference to a figure.

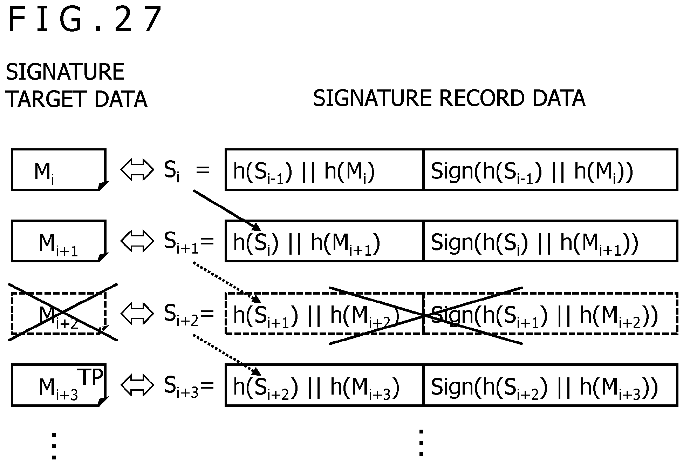

In the example illustrated in FIG. 27, Mᵢ₊₂ and Sᵢ₊₂, which have become unnecessary, have been deleted from the data group illustrated in FIG. 26. In this case, authenticity of data Mᵢ and Mᵢ₊₁ cannot be verified if the expiration times of signature record data Sᵢ and Sᵢ₊₁, which are previous to the deleted data, have passed, even if verification of authenticity of the latest signature target data Mᵢ₊₃ is possible.

US 2019/0325038 A1 discloses a consensus-based editable blockchain in which, based on consensus of the majority of participants of the blockchain, data payload is deleted or overwritten with random data or zeros.

CN 109542979 A discloses a method for saving storage capacity in a blockchain system, wherein an account hash is added in a block header data structure of the blockchain system, which represents a hash summary of a complete account. Thus, old blocks of data can be deleted during the operation of the node in the blockchain system, thereby saving storage capacity.

The present invention has been conceived in view of the above circumstances to make it possible to verify authenticity of undeleted signature target data when some items of signature target data have been deleted, in a digital signature technology for guaranteeing authenticity of a large number of items of signature target data for a long time.

### SUMMARY

The invention is defined in the independent claims. Particular embodiments are set out in the dependent claims.

A digital signature management method according to an embodiment of the present invention is a digital signature management method implemented by one or a plurality of computers, the method including: generating items of signature record data for items of signature target data inputted in chronological order; and generating an item of milestone data as a new item of signature target data every time the number of items of signature target data inputted reaches a predetermined value. Each item of signature record data includes a hash value of a corresponding item of signature target data, a hash value of an item of signature record data inputted immediately previously, and a signature for the hash value of the corresponding item of signature target data and the hash value of the item of signature record data inputted immediately previously. Each item of milestone data includes a hash value of at least one item of milestone data generated earlier, and hash values of items of signature record data corresponding to all items of signature target data inputted after generation of an immediately previous item of milestone data.

A digital signature management system according to a second embodiment of the present invention is a digital signature management system implemented by one or a plurality of computers, the system including a signature record generation section generating items of signature record data for items of signature target data inputted in chronological order. The signature record generation section generates an item of milestone data as a new item of signature target data every time the number of items of signature target data inputted reaches a predetermined value. Each item of signature record data includes a hash value of a corresponding item of signature target data, a hash value of an item of signature record data inputted immediately previously, and a signature for the hash value of the corresponding item of signature target data and the hash value of the item of signature record data inputted immediately previously. Each item of milestone data includes a hash value of at least one item of milestone data generated earlier, and hash values of items of signature record data corresponding to all items of signature target data inputted after generation of an immediately previous item of milestone data.

According to embodiments of the present invention, even when any signature target data for which the retention term has expired and which no longer needs to be retained and the corresponding signature record data have been deleted, authenticity verification is possible for remaining data that has not been deleted.

The details of one or more implementations of the subject matter described in the specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is an overall configuration diagram of a signature management system;
FIG. 2 is a hardware configuration diagram of each of a management server, an application server, a management terminal, and an auditing terminal;
FIG. 3 is a diagram illustrating an example of the data structure of signature record data;
FIG. 4 is a diagram illustrating an example of the structure of milestone data;
FIG. 5 is a diagram illustrating an example of trust point data;
FIG. 6 is a sequence diagram illustrating an example of a process of generating and managing the signature record data;
FIG. 7 is a sequence diagram illustrating an example of an authenticity verification process for signature target data;
FIG. 8 is a sequence diagram illustrating an example of a process of deleting the signature target data and the signature record data;
FIG. 9 is a flowchart illustrating an example of the process of generating the signature record data;
FIG. 10 is a flowchart illustrating an example of the process of generating the signature record data;
FIG. 11 is a flowchart illustrating an example of the process of generating the signature record data;
FIG. 12 is a flowchart illustrating an example of the authenticity verification process;
FIG. 13 is a flowchart illustrating an example of the authenticity verification process;
FIG. 14 is a flowchart illustrating an example of the authenticity verification process;
FIG. 15 is a flowchart illustrating an example of the authenticity verification process;
FIG. 16 is a flowchart illustrating an example of a process of a function F001;
FIG. 17 is a flowchart illustrating an example of a process of a function F002;
FIG. 18 is a flowchart illustrating an example of a process of a function F003;
FIG. 19 is a flowchart illustrating an example of a process of a function F004;
FIG. 20 is a flowchart illustrating an example of a process of a function F005;
FIG. 21 is a flowchart illustrating an example of a process of a function F006;
FIG. 22 is a diagram for explaining example effects of an embodiment;
FIG. 23 is a diagram for explaining example effects of the embodiment;
FIG. 24 is a diagram for explaining example effects of the embodiment;
FIG. 25 is a diagram illustrating an example manner in which a program is loaded into the management server;
FIG. 26 is a diagram illustrating an example related-art technique; and
FIG. 27 is a diagram illustrating the example related-art technique.

### DESCRIPTION OF THE EMBODIMENTS

### Embodiments

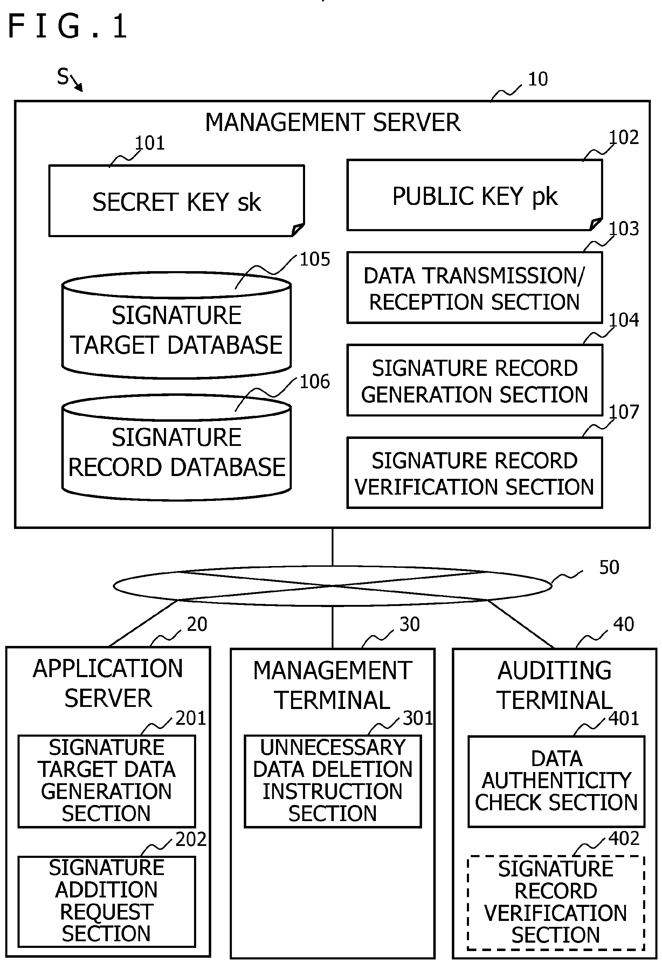

Hereinafter, a digital signature management method and a digital signature management system according to embodiments of the present invention will be described with reference to FIGS. 1 to 24.

### System configuration

FIG. 1 is an overall configuration diagram of a signature management system S according to an embodiment of the present invention. The signature management system S includes a management server 10, an application server 20, a management terminal 30, and an auditing terminal 40. The management server 10, the application server 20, the management terminal 30, and the auditing terminal 40 are connected via a network 50.

An outline of the operation of each component is as follows. The management server 10 generates and manages digital signatures. The application server 20 generates signature target data, and requests the management server 10 to generate and manage digitally signed data. The management terminal 30 manages retention limitation of the signature target data, and transmits, to the management server 10, a request to delete signature target data that has become deletable because of an expiration of a retention term thereof. The auditing terminal 40 transmits, to the management server 10, a request to check the authenticity of the signature target data managed by the management server 10. The foregoing is the outlines of the operations of the respective components.

The management server 10 has a secret key sk 101 for applying a digital signature, and a public key pk 102 associated with the secret key sk 101. Note that the public key pk 102 is stored in the form of a public key certificate, and therefore, the public key pk 102 may sometimes be referred to as a public key certificate 102 in the present embodiment. The management server 10 further includes a data transmission/reception section 103, a signature record generation section 104, a signature target database 105, a signature record database 106, and a signature record verification section 107.

The data transmission/reception section 103 transmits and receives the signature target data, messages for instructions of various processes, and so on. The signature record generation section 104 generates signature record data, which is digital signatures for the received signature target data and other data described below. The structure of the signature record data and a method for generating the signature record data will be described in detail below. The signature target data received by the data transmission/reception section 103 is stored in the signature target database 105. The signature record data generated by the signature record generation section 104 is stored in the signature record database 106. The signature record verification section 107 performs a process of verifying the authenticity of the signature target data using the signature record data. Note that the management server 10 may include a display section (not shown), such as a liquid crystal display, that displays a computation result.

The application server 20 includes a signature target data generation section 201 that generates the signature target data, and a signature addition request section 202 that requests the management server 10 to add the signature record data to the signature target data. The management terminal 30 includes an unnecessary data deletion instruction section 301 that makes a request to delete data that does not need to be retained in the management server 10 because of an expiration of the retention term of the data to which a signature is added. The auditing terminal 40 includes a data authenticity check section 401 that requests the management server 10 to subject the signature target data managed by the management server 10 to authenticity verification, and checks the result thereof. Note that the auditing terminal 40 may be provided with a signature record verification section 402 equivalent to the signature record verification section 107 included in the management server 10, and that an authenticity verification process for the signature target data performed in the management server 10 may be performed on the auditing terminal 40.

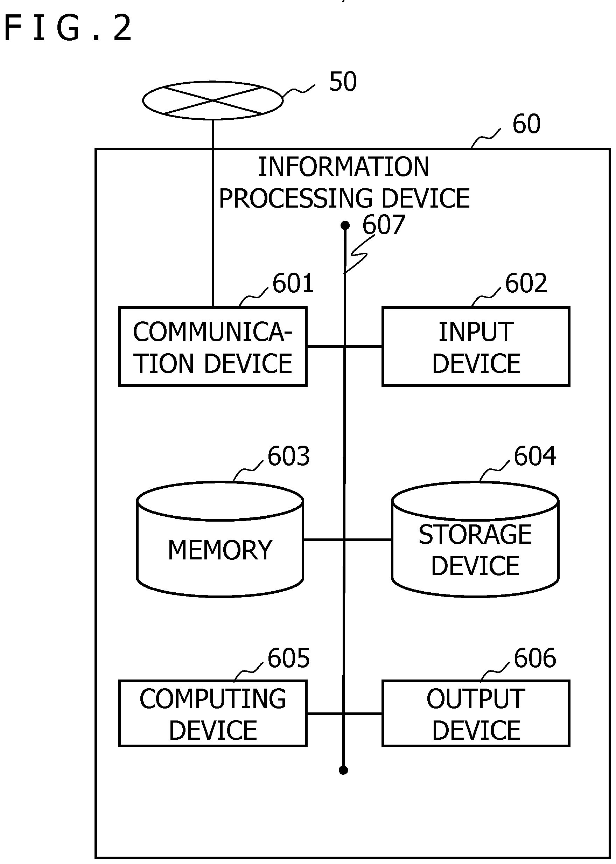

FIG. 2 is a hardware configuration diagram of each of the management server 10, the application server 20, the management terminal 30, and the auditing terminal 40. The management server 10, the application server 20, the management terminal 30, and the auditing terminal 40 have a common hardware configuration, and the hardware configuration is depicted as the configuration of an information processing device 60 in FIG. 2. Note that the management server 10, the application server 20, the management terminal 30, and the auditing terminal 40 may not necessarily have completely the same hardware configuration, but may be different in specific hardware configuration.

The information processing device 60 includes a communication device 601, an input device 602, a memory 603, a storage device 604, a computing device 605, and an output device 606. The communication device 601 is a communication module that supports at least one of cable communication and wireless communication. The input device 602 includes a keyboard, a mouse, or the like used to accept an input. The memory 603 is a volatile storage device, and allows faster reading and writing than the storage device 604. The storage device 604 is a nonvolatile storage device, e.g., a hard disk drive. The computing device 605 is a central computing device. The output device 606 is a liquid crystal display device, an organic electro luminescence (EL) display, or the like.

Each of the data transmission/reception section 103, the signature record generation section 104, the signature record verification section 107, the signature target data generation section 201, the signature addition request section 202, the unnecessary data deletion instruction section 301, the data authenticity check section 401, and the signature record verification section 402 can be implemented by a computer program executed by the computing device 605. Such a computer program may be stored in advance in the storage device 604, or may be delivered from a nontemporary storage device of another device via the network 50, or from a nontemporary storage medium, and be loaded on the memory 603 for use.

Each of the secret key sk 101 and the public key pk 102 retained in the management server 10 may be stored in the storage device 604 and be loaded on the memory 603 for use. Each of the signature target database 105 and the signature record database 106 of the management server 10 is stored in the storage device 604. An instruction from a user of the present system is entered via the input device 602, e.g., the keyboard, the mouse, or the like, which is used to accept the input, and a result of a process initiated by the instruction is displayed by the output device 606, such as the liquid crystal display device, the organic electro luminescence (EL) display, or the like. Each of the management server 10, the application server 20, the management terminal 30, and the auditing terminal 40 is provided with the communication device 601 to communicate with another device via the network 50, and may be implemented on the information processing device 60, which has sections connected via internal communication lines 607.

### Data structures

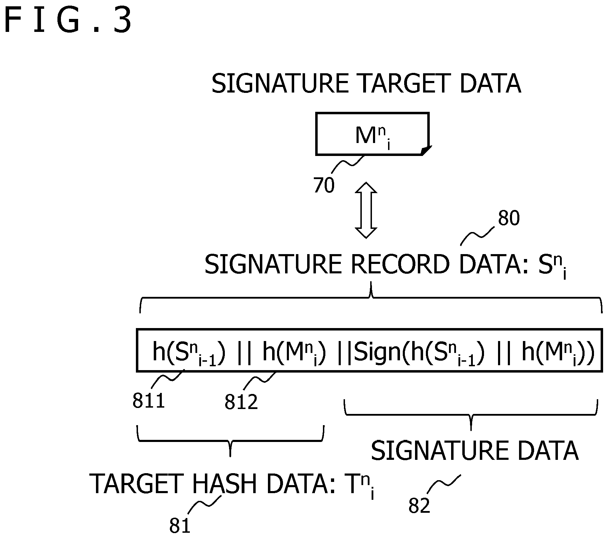

The data structures will be described below with reference to FIGS. 3 to 5. FIG. 3 is a diagram illustrating the data structure of the signature record data. In the present embodiment, electronic data for which there is a desire to guarantee authenticity is referred to as signature target data 70, and is denoted as Mⁿᵢ, for example. The "n" at the upper right indicates that the data is between nth and (n+1)th items of milestone data 90, which will be described below. The subscript "i" indicates that the signature target data Mⁿᵢ is an ith item of signature target data 70 between the nth and (n+1)th items of milestone data. Hereinafter, the expression "signature target data 70" is used when the signature target data 70 in general is described, while the expression "signature target data Mⁿᵢ" is used, using n and i for specification, when a specific item of signature target data 70 is described.

In the present embodiment, data used to guarantee the authenticity of the signature target data 70 is referred to as signature record data 80, and data used to guarantee the authenticity of the signature target data Mⁿᵢ in particular is denoted as signature record data Sⁿᵢ. Specifically, "n" at the upper right and the subscript "i" of the signature record data Sⁿᵢ correspond to "n" and "i," respectively, of the signature target data Mⁿᵢ.

The signature record data 80 is made up of target hash data 81 and signature data 82. The target hash data 81 of the signature record data Sⁿᵢ is a value representing a combination of a hash value 811 of immediately previous signature record data Sⁿᵢ₋₁ and a hash value 812 of the signature target data Mⁿᵢ, and is denoted as Tⁿᵢ. The signature data 82 of the signature record data Sⁿᵢ is signature data obtained by attaching a digital signature, typified by an RSA signature or the like, to the target hash data Tⁿᵢ using the secret key sk 101, and is denoted as Sign (Tⁿᵢ) = Sign (h (Sⁿᵢ₋₁) | | h (Mⁿᵢ)) . Here, "h()" means a hash function, and " | |" means a combination of data items. The combination of data items may be implemented in any predetermined fashion, not limited to specific means. For example, a predetermined delimiter may be used to implement the combination, or alternatively, bit strings as they are may be combined together without using a delimiter if the data field length of each is fixed.

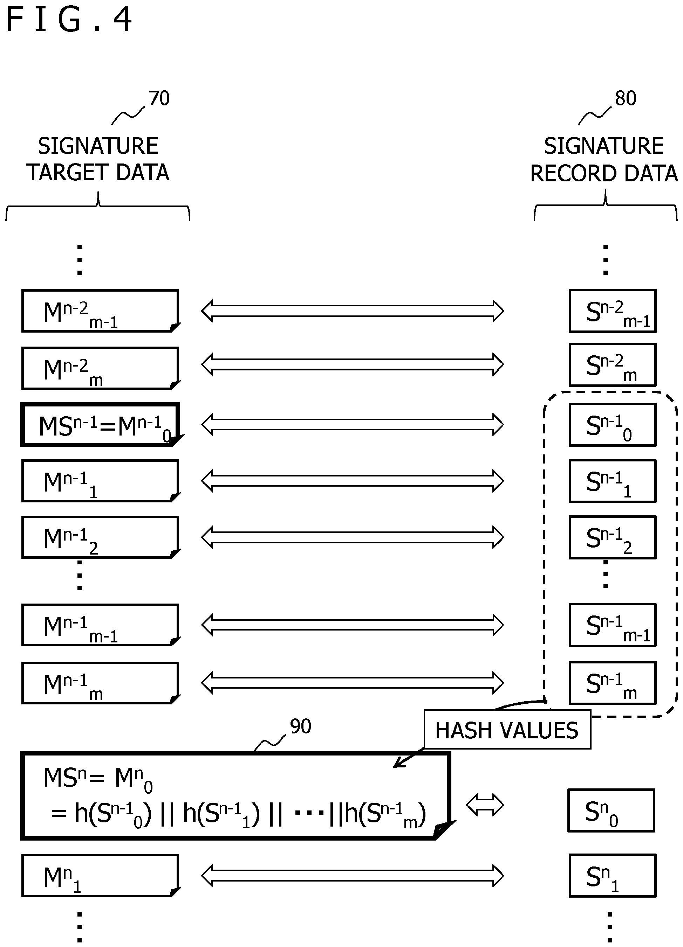

FIG. 4 is a diagram illustrating the structure of the milestone data 90. In the present embodiment, when the signature target data is received, items of milestone data 90 are generated at a fixed interval m. Although the milestone data 90 is not data received from an external entity, the milestone data 90 is also included in the signature target data for the sake of convenience in description. In the present embodiment, the nth item of milestone data is denoted as MSⁿ. When it is stressed that the milestone data 90 is signature target data, an expression like MSⁿ = Mⁿ₀ is used. Moreover, the latest item of milestone data MSⁿ is denoted as MS^{new}.

The milestone data 90 is made up of a combination of hash values of items of signature record data 80 for the immediately previous milestone data 90 and subsequent items of signature record data 80. The nth item of milestone data MSⁿ is made up of a combination of a hash value of signature record data Sⁿ⁻¹₀ corresponding to the immediately previous milestone data MSⁿ⁻¹, a hash value of signature record data Sⁿ⁻¹₁ for next signature target data, ... , and a hash value of signature record data Sⁿ⁻¹ₘ. When expressed in mathematical notation, MSⁿ = h(Sⁿ⁻¹₀) | | h (Sⁿ⁻¹₁) | | ··· | | h (Sⁿ⁻¹ₘ) .

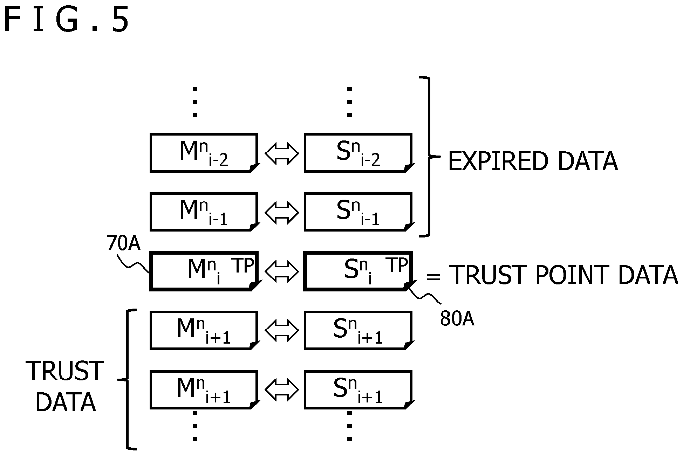

FIG. 5 is a diagram illustrating trust point data. In the present embodiment, first signature target data 70A for which an expiration time of the signature has not been reached, and first signature record data 80A for which the expiration time of the signature has not been reached, are referred to as "trust point data." The expiration time of the signature coincides with an expiration time of the public key certificate 102 used to verify the signature. The management server 10 uses the secret key sk 101 the expiration time of which has not been reached, at least when generating the signature record data 80. The management server 10 may continue to use the same secret key sk 101 until the expiration time thereof is reached, or may generate and use a new secret key sk 101 before the expiration time thereof is reached.

In the present embodiment, the trust point data and items of data subsequent to the trust point data are referred to as "trust data." In other words, the trust data refers to items of signature record data and signature target data for which the expiration time of the signature has not been reached. Note that all data previous to the trust point data is expired data.

### Sequence diagrams

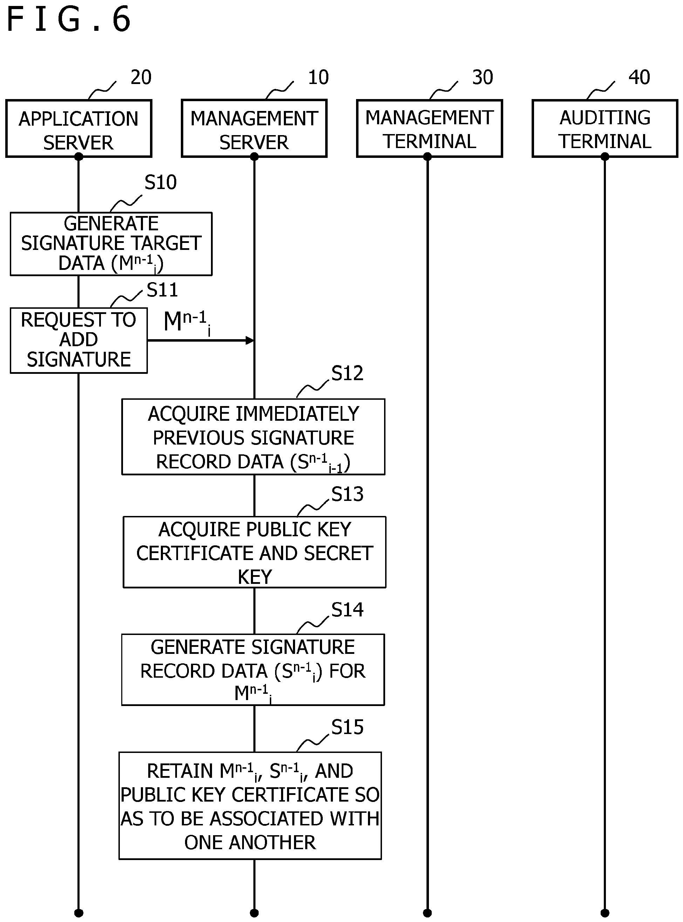

An outline of an operation of the signature management system will now be described below with reference to sequence diagrams of FIGS. 6 to 8. FIG. 6 is a sequence diagram illustrating an example of a process of generating and managing the signature record data. First, the application server 20 generates electronic data for which there is a desire to guarantee authenticity for a long time as signature target data 70 (Mⁿ⁻¹i) (step S10). The signature target data 70 may be document data, image data, audio data, or the like. Then, in order to guarantee the authenticity of the signature target data 70 (Mⁿ⁻¹ᵢ), the application server 20 requests the management server 10 to add a signature thereto (step S11) .

Note that the application server 20 has not been informed of the numbers of the milestone data 90, and the like, and that "n-1" and "i" of the signature target data Mⁿ⁻¹ᵢ are subsequently determined by the management server 10. Specifically, the management server 10 determines that the received signature target data 70 is an ith item of signature target data 70 after generation of an (n-1)th item of milestone data 90, taking into account the numbers of the signature target data 70 stored in the signature target database 105. In FIG. 6, the expression "Mⁿ⁻¹ᵢ" is used at step S10 and thereafter simply for the sake of consistency in description.

Upon receipt of the request to add a signature, the management server 10 fetches the latest signature record data Sⁿ⁻¹ᵢ₋₁ retained in the signature record database 106 (step S12). Next, the management server 10 acquires the public key certificate pk 102 and the secret key sk 101 stored in the management server 10 (step S13). Note that, if the public key certificate pk 102 and the secret key sk 101 have already expired at the time of the acquisition, or if only a time shorter than a predetermined period is left before the expiration thereof, the management server 10 performs the following process. Specifically, the management server 10 discards the public key certificate pk 102 and the secret key sk 101, generates new ones, and stores the newly generated public key certificate pk 102 and secret key sk 101 in the management server 10 to be used at the next step S14 and so on.

Next, the management server 10 generates signature record data Sⁿ⁻¹ᵢ for the signature target data Mⁿ⁻¹ᵢ received from the application server 20 (step S14). This signature record data 80 is Sⁿ⁻¹ᵢ = Tⁿ⁻¹ᵢ| | Sign(Tⁿ⁻¹ᵢ) = (h (Sⁿ⁻¹ᵢ₋₁) | | h (Mⁿ⁻¹ᵢ)) | | Sign (h (Sⁿ⁻¹ᵢ₋₁) | | h (Mⁿ⁻¹ᵢ)) . A process of generating the signature record data 80 at step S14 will be described in detail below with reference to flowcharts.

Next, the management server 10 retains the signature target data Mⁿ⁻¹ᵢ in the signature target database 105, and retains the signature record data Sⁿ⁻¹ᵢ generated at step S14 in the signature record database 106 (step S15). At this time, the management server 10 retains the signature target data Mⁿ⁻¹ᵢ and the signature record data Sⁿ⁻¹ᵢ so as to be associated with each other using the same identifier or the like. Note that identifiers are numbered such that an order is clearly known, and are retained so that the normal signature target data and the milestone data are both identifiable. Further, the management server 10 retains the public key certificate 102 acquired at step S13 as well so as to be associated with the signature record data Sⁿ⁻¹ᵢ in the signature record database 106.

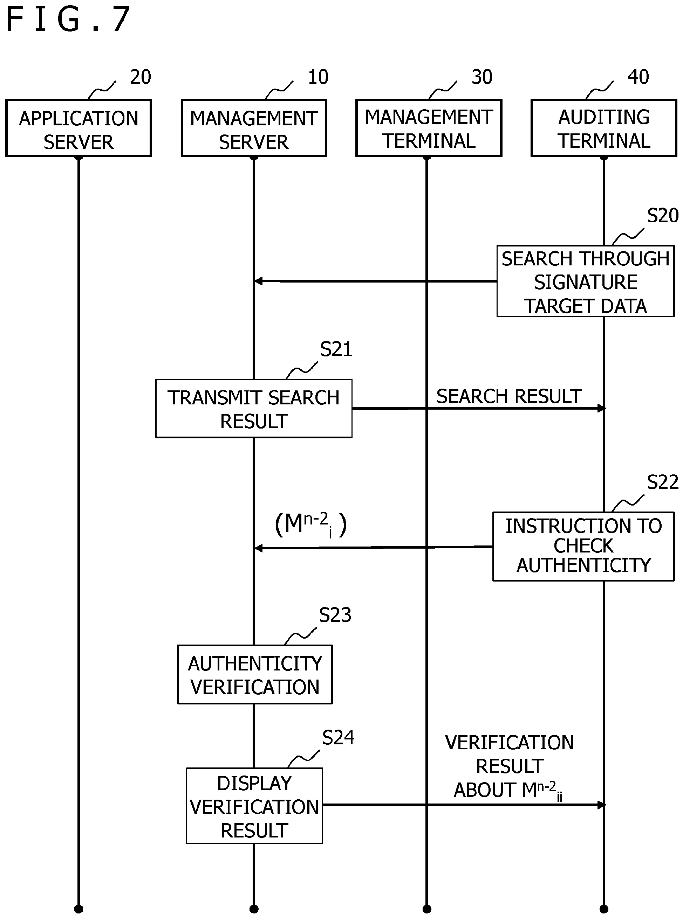

FIG. 7 is a sequence diagram illustrating an example of the authenticity verification process for the signature target data. First, the auditing terminal 40 performs a search, with a search condition specified, through the signature target data managed in the signature target database 105 of the management server 10 (step S20). The management server 10 performs a search through the signature target data 70 according to the search condition, and transmits a search result(s), such as caption information or the like of relevant signature target data 70, to the auditing terminal 40 (step S21). The auditing terminal 40 specifies signature target data for which there is a desire to check authenticity from among a list of the search results, and transmits an instruction to check the authenticity thereof to the management server 10 (step S22).

In accordance with the instruction at step S22, the management server 10 fetches the relevant signature target data 70 and signature record data 80, and the public key certificate 102, and checks the authenticity of the signature target data 70 (step S23). A specific method of this verification at step S23 will be described below with reference to a flowchart. Then, the management server 10 transmits a verification result to the auditing terminal 40 (step S24). Although, in FIG. 7, the authenticity verification process at step S23 is performed in the management server 10, the authenticity verification process may alternatively be performed by the signature record verification section 402 of the auditing terminal 40 with all data necessary for the verification process transmitted to the auditing terminal 40.

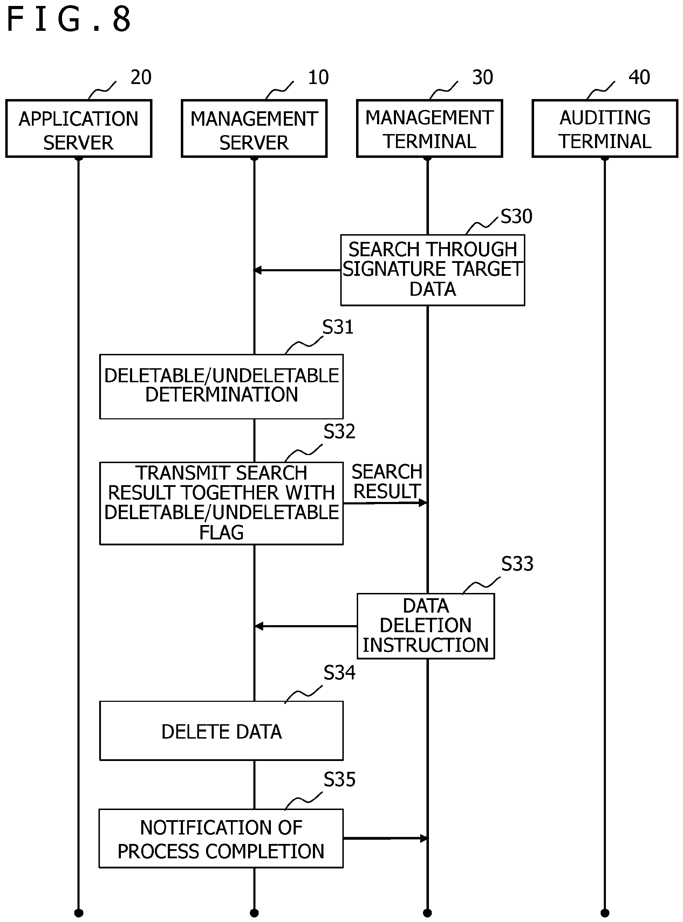

FIG. 8 is a sequence diagram illustrating an example of a process of deleting the signature target data 70 and the signature record data 80. First, the management terminal 30 performs a search, with a search condition specified, through the signature target data 70 stored in the signature target database 105 of the management server 10 (step S30). The management server 10 performs a search through the signature target data 70 in accordance with the search condition, and further determines signature target data 70 that meets neither of the following two deletion-prohibiting conditions to be deletable signature target data 70 (step S31). A first deletion-prohibiting condition states that no milestone data should be deleted. A second deletion-prohibiting condition states that no signature target data and corresponding signature record data 80 should be deleted until milestone data including a hash value of the corresponding signature record data 80 is generated.

The second deletion-prohibiting condition will now be specifically described below with reference to FIG. 4. For example, regarding the signature target data Mⁿ⁻¹₁ to Mⁿ⁻¹ₘ, the milestone data MSⁿ including the hash values of the corresponding signature record data 80, Sⁿ⁻¹₁ to Sⁿ⁻¹ₘ, has already been generated. Therefore, Mⁿ⁻¹₁ to Mⁿ⁻¹ₘ do not meet the second deletion-prohibiting condition. Meanwhile, signature target data Mⁿᵢ, depicted at the bottom of FIG. 4, does not meet the second deletion-prohibiting condition if MSⁿ⁺¹ has already been generated, but meets the second deletion-prohibiting condition if MSⁿ⁺¹ has not yet been generated. The description with reference to FIG. 8 will now be resumed.

Then, on the basis of the determination at step S31, the management server 10 transmits, to the management terminal 30, a search result(s), such as caption information or the like of relevant signature target data 70 together with a deletable/undeletable flag (step S32). The management terminal 30 specifies deletable signature target data 70 from among a list of the search results, and issues a data deletion instruction to the management server 10 (step S33). The management server 10 deletes the signature target data 70 from the signature target database 105 according to the instruction at step S33. Further, the management server 10 additionally deletes the signature record data 80 and the public key certificate stored in the signature record database 106 on the basis of the identifier of the signature target data 70 (step S34). Note that the deletion of the signature record data 80 and the public key certificate is not essential. Then, the management server 10 notifies the management terminal 30 that the deletion process has been completed (step S35).

### Flowcharts

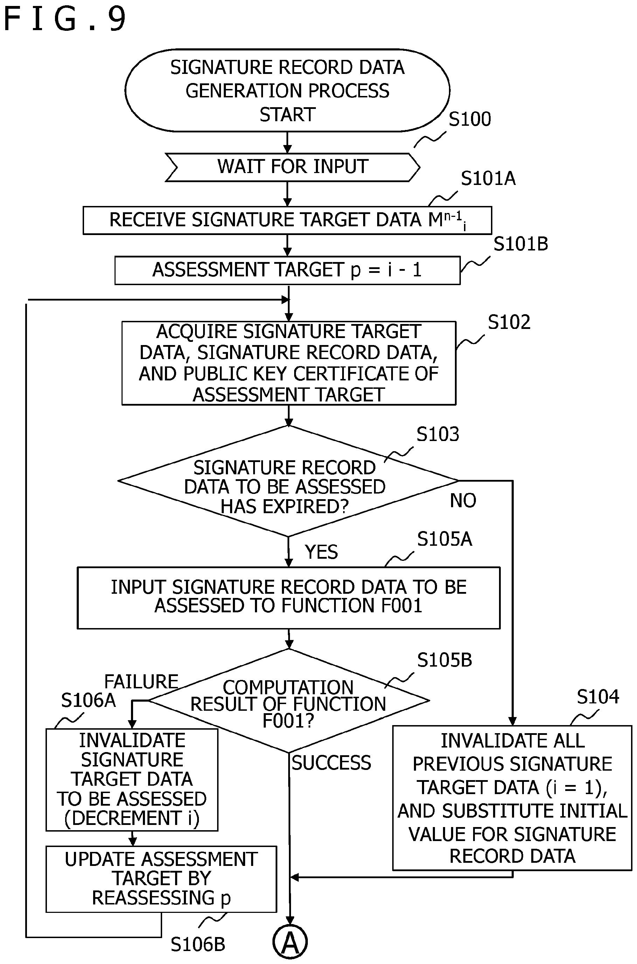

FIGS. 9 to 11 are flowcharts illustrating the process of generating the signature record data at step S14 in FIG. 6. Note that an initial value of the signature record data is set in advance as S⁰₀ = IV.

The management server 10 first waits for an input of a request to add a signature from the application server 20 at step S100, once the process of generating the signature record data is started. At the next step S101A, upon receipt of the signature target data 70 from the application server 20, provisional numbers of the received signature target data 70 are determined on the basis of information stored in the signature target database 105. Here, for the sake of convenience, the signature target data 70 received from the application server 20 is referred to as the signature target data Mⁿ⁻¹ᵢ using "n-1" and "i." Note that these numbers are provisional numbers, and may be changed by a process described below.

At the next step S101B, the management server 10 sets "i-1" to a variable p indicating an assessment target for the sake of convenience, and proceeds to step S102. At step S102, the management server 10 acquires signature target data Mⁿ⁻¹ₚ and signature record data Sⁿ⁻¹ₚ, which are indicated using the variable p, and the corresponding public key certificate from the signature record database 106. At the next step S103, the management server 10 determines whether the signature record data Sⁿ⁻¹ₚ acquired at step S102 has expired or not. Specifically, the management server 10 performs the determination at step S103 by comparing an expiration time of the corresponding public key certificate with the current date and time. The management server 10 proceeds to step S105A if it is determined that the expiration time has not been reached, but proceeds to step S104 if it is determined that the expiration time has passed.

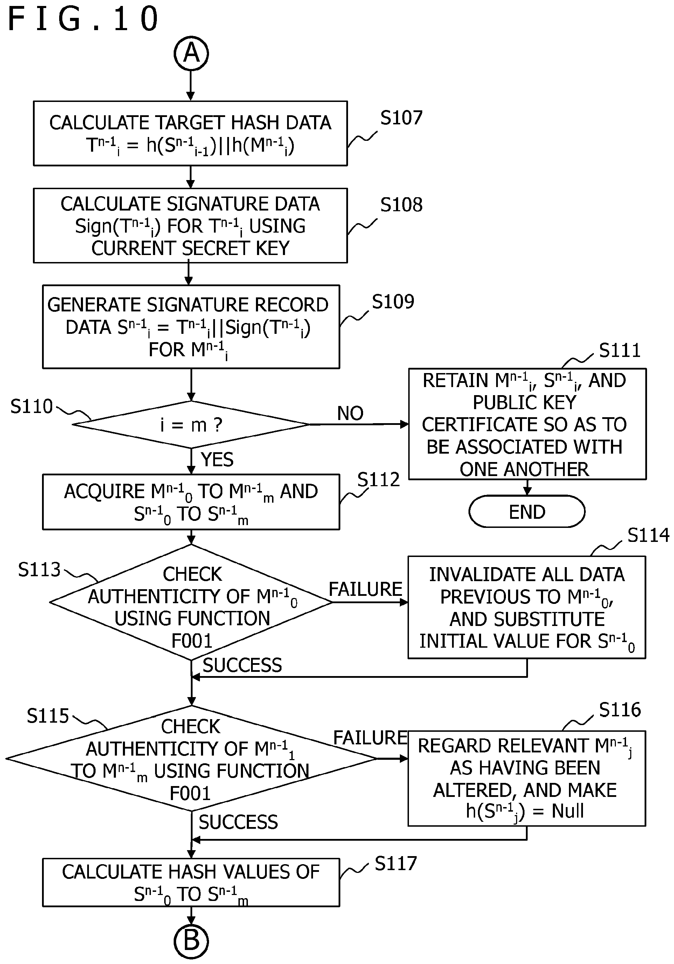

At step S105A, the management server 10 inputs the signature record data Sⁿ⁻¹ₚ, which is signature record data to be assessed, to a function F001. A process of the function F001 will be described below. At the next step S105B, the management server 10 determines whether a computation result of the function F001 to which the input has been made at step S105A indicates a success or a failure. The management server 10 proceeds to step S107 in FIG. 10 through circled "A" if it is determined that the computation result of the function F001 indicates a success. The management server 10 proceeds to step S106A if it is determined that the computation result of the function F001 indicates a failure.

At step S106A, the management server 10 decrements the variable i, i.e., decreases the value of i by one, to invalidate the signature target data Mⁿ⁻¹ₚ to be assessed. Since the decrementing of i at this step will cause the signature target data which has been determined to be invalid by the function F001 to be overwritten by the received signature target data in a subsequent process, the value of i is decremented at this step.

At the next step S106B, the management server 10 updates the assessment target by making the update of the value of i at step S106A be reflected in the variable p as well. Note that step S106B has been explicitly presented only for the sake of preventing a misunderstanding of the process, and that the process of step S106B does not need to be performed independently if the value of the variable i is assessed as necessary during steps S102 to S105B. After the process of step S106B is completed, the management server 10 returns to step S102. That is, in the loop of steps S102 to S106A, excluding step S104, the management server 10 continues to trace the signature record data from the latest to older signature record data until valid signature record data is found.

At step S104, which is performed if a negative determination is made at step S103, the management server 10 invalidates all previous signature target data, changing the value of the variable i to "1," and further substitutes the initial value "IV" for the signature record data S⁰₀. This initial value "IV" may be any fixed value determined in advance, and the value itself does not have a special meaning. After the process of step S104 is completed, the management server 10 proceeds to step S107 in FIG. 10 through circled "A." Hereinafter, a continuation of the flowchart will be described with reference to FIG. 10.

At a first process in FIG. 10, step S107, the signature record generation section 104 of the management server 10 calculates target hash data Tⁿ⁻¹ᵢ = h (Sⁿ⁻¹ᵢ₋i) | |h(Mⁿ⁻¹ᵢ) from the signature target data Mⁿ⁻¹ᵢ received at step S101A and the signature record data Sⁿ⁻¹ᵢ₋₁ acquired at step S102 to be processed. At the next step S108, the management server 10 calculates signature data Sign(Tⁿ⁻¹ᵢ) for the target hash data Tⁿ⁻¹ᵢ using the current secret key sk 101. At the next step S109, the management server 10 generates the signature record data Sⁿ⁻¹ᵢ = Tⁿ⁻¹ᵢ | | Sign (Tⁿ⁻¹ᵢ) made up of a combination of the target hash data Tⁿ⁻¹ᵢ calculated at step S107 and the signature data Sign(Tⁿ⁻¹ᵢ) calculated at step S108.

At the next step S110, the signature record generation section 104 of the management server 10 determines whether the value of the variable i is equal to m, which is a fixed value determined in advance and indicating the interval at which items of milestone data are generated. The signature record generation section 104 proceeds to step S112 if it is determined that the variable i is equal to m, but proceeds to step S111 if it is determined that the variable i is not equal to m.

At step Sill, the management server 10 retains the signature target data Mⁿ⁻¹ᵢ in the signature target database 105, retains the signature record data Sⁿ⁻¹ᵢ generated at step S109 in the signature record database 106, and finishes the process of generating the signature record data. After the process of generating the signature record data is finished, the management server 10 waits for a receipt of next signature target data. Note that, at step Sill, the signature target data Mⁿ⁻¹ᵢ and the signature record data Sⁿ⁻¹ᵢ are retained so as to be associated with each other using the same identifier or the like, and the current public key certificate 102 is retained in the signature record database 106 so as to be associated with the signature record data Sⁿ⁻¹ᵢ.

At step S112, which is performed if a positive determination is made at step S110, the management server 10 acquires the immediately previous milestone data MSⁿ⁻¹ and all items of signature target data Mⁿ⁻¹₁ to Mⁿ⁻¹ₘ that are subsequent to the immediately previous milestone data MSⁿ⁻¹ from the signature target database 105, in order to generate the milestone data MSⁿ. Further, the management server 10 acquires the signature record data Sⁿ⁻¹₀ corresponding to the immediately previous milestone data MSⁿ⁻¹, and signature record data Sⁿ⁻¹₁ to Sⁿ⁻¹ₘ corresponding to all items of signature target data Mⁿ⁻¹₁ to Mⁿ⁻¹ₘ that are subsequent to the immediately previous milestone data MSⁿ⁻¹, from the signature record database 106. At the next step S113, the management server 10 checks the authenticity of the immediately previous milestone data MSⁿ⁻¹ = Mⁿ⁻¹₀ using the function F001, which will be described below.

If a computation result of the function F001 indicates a success at step S113, the management server 10 proceeds to step S115, while if the computation result of the function F001 indicates a failure at step S113, the management server 10 proceeds to step S114. At step S114, the management server 10 regards all data previous to the milestone data MSⁿ⁻¹ = Mⁿ⁻¹₀ as invalid, substitutes "IV" (initial value) for Sⁿ⁻¹₀, and proceeds to step S115 with the initial value.

At step S115, the management server 10 checks the authenticity of all the remaining items of signature target data Mⁿ⁻¹₁ to Mⁿ⁻¹ₘ sequentially using the function F001, which will be described below. Then, at step S116, any signature target data Mⁿ⁻¹ⱼ for which a failure determination has been made at step S115 is regarded as having been altered, making h(Sⁿ⁻¹ⱼ) = Null. More specifically, although a detailed illustration is omitted in FIG. 10, a success/failure determination is made independently with respect to each item of signature target data, and the flowchart is more precise if the determination process at step S115 is depicted as being performed repeatedly as many times as the number of items of signature target data.

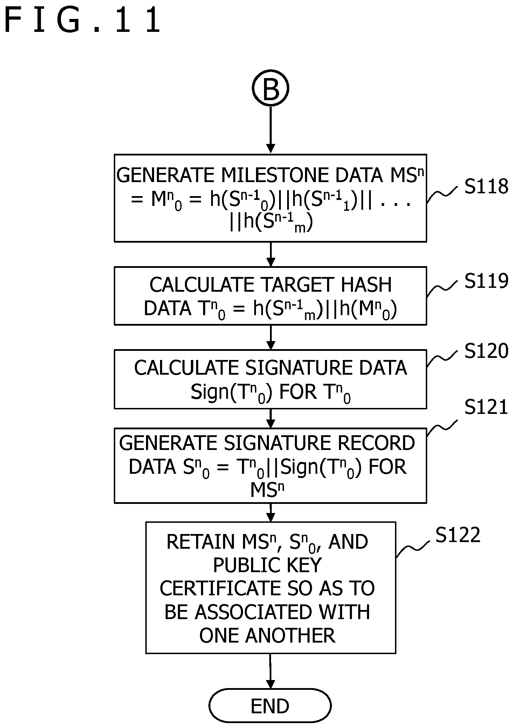

At the next step S117, the management server 10 calculates the hash values of Sⁿ⁻¹₀ to Sⁿ⁻¹ₘ. Note that any signature target data that has passed through step S116 has a hash value of Null. Thereafter, the management server 10 proceeds to step S118 in FIG. 11 through circled "B."

At step S118 in FIG. 11, the management server 10 generates the milestone data MSⁿ = Mⁿ₀ = h(Sⁿ⁻¹₀) | | ··· | | h(Sⁿ⁻¹ₘ). At the next step S119, the management server 10 calculates the hash value of the milestone data MSⁿ calculated at step S118, and combines this hash value with h(Sⁿ⁻¹ₘ), calculated last in step S117, to calculate target hash data Tⁿ₀ = h (Sⁿ⁻¹ₘ) | | h (Mⁿ₀) . At the next step S120, the management server 10 generates signature data for the target hash data Tⁿ₀ calculated at step S119.

At the next step S121, the management server 10 generates signature record data Sⁿ₀ = Tⁿ₀ | | Sign(Tⁿ₀) for the milestone data MSⁿ = Mⁿ₀. Finally, at step S122, the management server 10 retains the milestone data MSⁿ = Mⁿ₀ in the signature target database 105, retains the signature record data Sⁿ₀ generated at step S121 in the signature record database 106, and finishes the process of generating the signature record data. Note that, at step S122, the milestone data MSⁿ = Mⁿ₀ and the signature record data Sⁿ₀ are retained so as to be associated with each other using the same identifier or the like, and the current public key certificate 102 is retained in the signature record database 106 so as to be associated with the signature record data Sⁿ₀. The process of generating the signature record data has been described above.

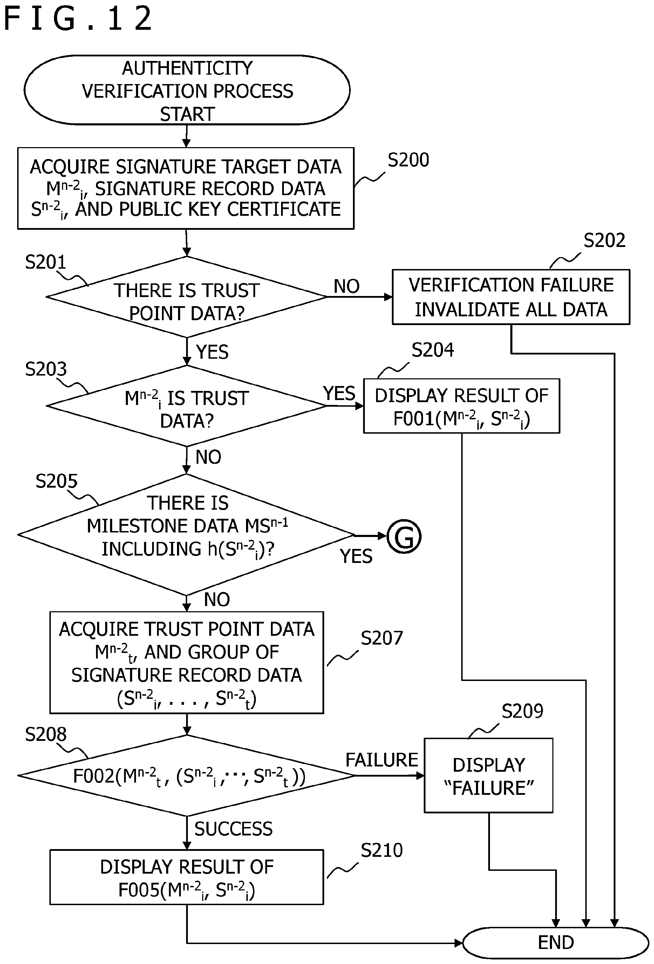

FIGS. 12 to 15 are flowcharts illustrating the authenticity verification process for the signature target data at step S23 in FIG. 7. The authenticity verification process is started when the signature target data to be subjected to authenticity verification has been specified by the auditing terminal 40. This process will be described here on the assumption that the signature target data specified by the auditing terminal 40 is "signature target data Mⁿ⁻²ᵢ."

First at step S200, the signature record verification section 107 of the management server 10 acquires the relevant signature target data Mⁿ⁻²ᵢ from the signature target database 105, and further, using the identifier, acquires signature record data Sⁿ⁻²ᵢ for the signature target data Mⁿ⁻²ᵢ and the corresponding public key certificate from the signature record database 106. Note that the signature target data is acquired from the signature target database 105, and the signature record data and the corresponding public key certificate are acquired from the signature record database 106, although this may not be explicitly mentioned hereinafter to simplify the description. The expiration time of the signature target data and the signature record data is determined from the expiration time of the public key certificate associated with the signature record data stored in the signature record database 106.

At the next step S201, the signature record verification section 107 checks the expiration times of the public key certificates stored in the signature record database 106 from the latest to older expiration times, and determines whether there is trust point data (step S201). Note that, when all data is trust data, a first item of the data, in other words, the oldest item of the data stored, is regarded as the trust point data. The signature record verification section 107 proceeds to step S203 if it is determined that there is the trust point data, but proceeds to step S202 if it is determined that there is no trust point data.

At step S202, since all the data retained in the signature target database 105 and the signature record database 106 has already expired, and the authenticity cannot be verified for any of the data, the management server 10 issues a notification of a verification failure, and regards all the data as invalid. Meanwhile, at step S203, the management server 10 checks whether the signature target data Mⁿ⁻²ᵢ to be verified is trust data. The management server 10 proceeds to step S204 if it is determined that the signature target data Mⁿ⁻²ᵢ is trust data, but proceeds to step S205 if it is determined that the signature target data Mⁿ⁻²ᵢ is not trust data.

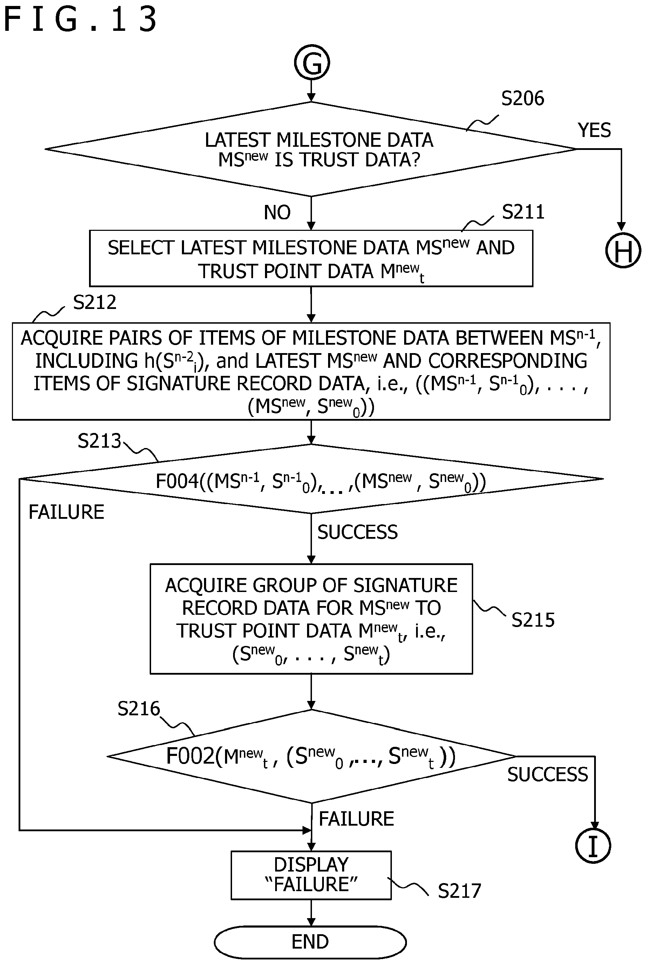

At step S204, the management server 10 checks the authenticity of the signature target data Mⁿ⁻²ᵢ using the function F001, which will be described below, displays a result thereof on the display section, and finishes the authenticity verification process. Meanwhile, at step S205, the management server 10 determines whether there is the milestone data MSⁿ⁻¹ including a hash value h(Sⁿ⁻²ᵢ) of the signature record data for the signature target data Mⁿ⁻²ᵢ to be verified. The management server 10 proceeds to step S206 in FIG. 13 through circled "G" if it is determined that there is the milestone data MSⁿ⁻¹ including the hash value h(Sⁿ⁻²ᵢ), but proceeds to step S207 if it is determined that there is not the milestone data MSⁿ⁻¹ including the hash value h(Sⁿ⁻²ᵢ).

At step S207, since there is trust point data Mⁿ⁻²ₜ (i < t < m) generated at a time later than the specified signature target data 70, the management server 10 acquires the trust point data Mⁿ⁻²ₜ, and a group of signature record data (Sⁿ⁻²ᵢ, ··· , Sⁿ⁻²ₜ) for Mⁿ⁻²ᵢ to Mⁿ⁻²ₜ.

At the next step S208, the management server 10 subjects the signature record data Sⁿ⁻²ᵢ to authenticity verification using a function F002, which will be described below, to verify whether the signature record data Sⁿ⁻²ᵢ is authentic. If it is determined that a result of the function F002 is successful, the management server 10 proceeds to step S210, checks the authenticity of the signature target data Mⁿ⁻²ᵢ to be verified using a function F005, which will be described below, displays a result thereof, and finishes the authenticity verification process. If it is determined that the result of the function F002 is a failure, the management server 10 proceeds to step S209, and indicates on the display section that the authenticity of the signature target data Mⁿ⁻²ᵢ to be verified cannot be verified, and finishes the authenticity verification process. A process to be performed when a positive determination has been made at step S205 will now be described below with reference to FIG. 13.

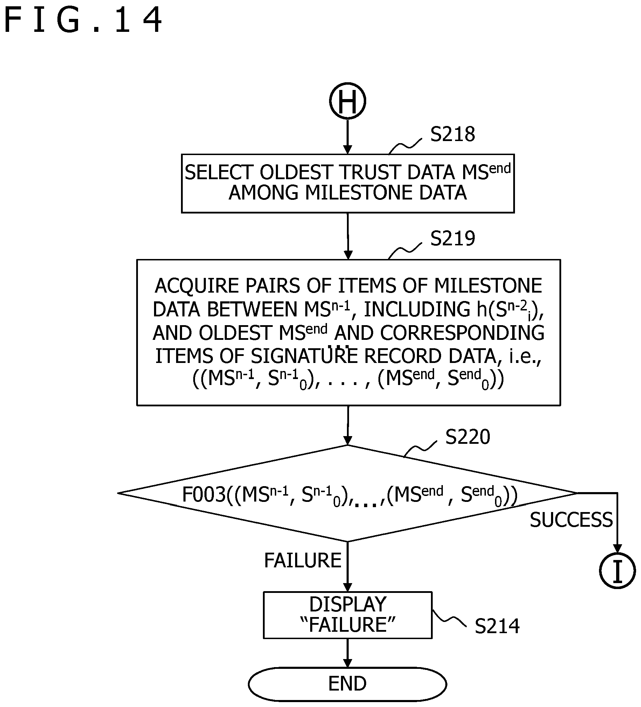

Step S206 at the top in FIG. 13 is performed when a positive determination has been made at step S205. At step S206, the management server 10 determines whether the latest milestone data MS^{new} is trust data. The management server 10 proceeds to step S218 in FIG. 14 through circled "H" if it is determined that the latest milestone data MS^{new} is trust data. The management server 10 proceeds to step S211 if it is determined that the latest milestone data MS^{new} is not trust data.

At step S211, the management server 10 acquires the latest milestone data MS^{new} and the latest trust point data M^{new}ₜ (0 < t < m) . At the next step S212, the management server 10 acquires pairs ((MSⁿ⁻¹, Sⁿ⁻¹₀), ··· , (MS^{new}, S^{new}₀)) of all items of signature target data between the milestone data MSⁿ⁻¹, including the hash value h(Sⁿ⁻²ᵢ) of the signature record data to be verified, and the latest milestone data MS^{new} and corresponding items of signature record data.

At the next step S213, the management server 10 determines whether a chain of records from MSⁿ⁻¹ to MS^{new} is valid using a function F004, which will be described below. The management server 10 proceeds to step S215 if it is determined that the record chain is valid, i.e., a computation result of the function F004 is successful, but proceeds to step S217 if it is determined that the record chain is not valid, i.e., the computation result of the function F004 is a failure.

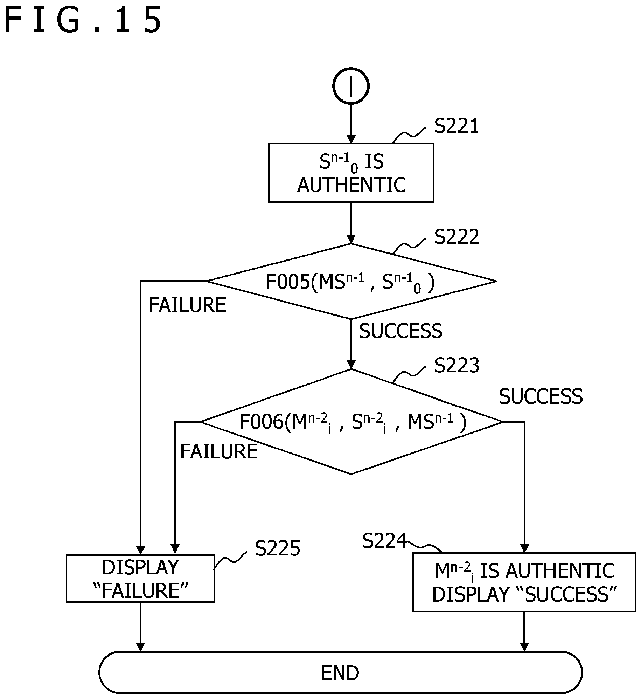

At step S215, since there is the trust point data M^{new}ₜ (0 < t < m), which is signature target data generated later than the latest milestone data MS^{new}, the management server 10 acquires a group of signature record data (S^{new}₀, ··· , S^{new}ₜ) for the latest milestone data MS^{new} to the trust point data M^{new}ₜ. Then, at the next step S216, the management server 10 checks the authenticity of the signature record data S^{new}₀ using the function F002, which will be described below, and assesses a computation result thereof. The management server 10 proceeds to step S221 in FIG. 15 through circled "I" if it is determined that the authenticity of the signature record data S^{new}₀ has been verified, i.e., the computation result of the function F002 is successful. The management server 10 proceeds to step S217 if it is determined that the authenticity of the signature record data S^{new}₀ cannot be verified, i.e., the computation result of the function F002 is a failure.

At step S217, which is performed if a negative determination is made at either step S213 or step S216, the inability to verify the authenticity of the signature target data Mⁿ⁻²ᵢ to be verified is indicated on the display section, and the authenticity verification process is finished. A process to be performed when a positive determination has been made at step S206 in FIG. 13 will now be described below with reference to FIG. 14.

Step S218 at the top in FIG. 14 is performed when a positive determination has been made at step S206. At step S218, the management server 10 selects the oldest trust data MS^{end} among the milestone data. At the next step S219, the management server 10 acquires pairs of signature target data and signature record data that meet the following conditions. That is, the signature target data is a continuous series of milestone data, the latest signature target data is the milestone data MSⁿ⁻¹, including the hash value h(Sⁿ⁻²ᵢ) of the signature record data to be verified, and the oldest signature target data is the oldest milestone data MS^{end} that is trust data. The pairs of signature target data and signature record data acquired at this step can be denoted symbolically as (MSⁿ⁻₁, Sⁿ⁻¹₀) , ··· , (MS^{end}, S^{end}₀).

At the next step S220, the management server 10 inputs the data acquired at step S219 to a function F003, which will be described below, and checks a computation result thereof. The management server 10 proceeds to step S221 in FIG. 15 through circled "I" if it is determined that the computation result of the function F003 is successful, but proceeds to step S214 if it is determined that the computation result of the function F003 is a failure. At step S214, the management server 10 indicates on the display section that the authenticity of the signature target data Mⁿ⁻²ᵢ to be verified cannot be verified, and finishes the authenticity verification process. A process to be performed when a positive determination has been made at step S220 will now be described below with reference to FIG. 15.

Step S221 at the top in FIG. 15 is performed when a positive determination has been made at step S220. At step S221, the authenticity of the signature record data Sⁿ⁻¹₀ is verified by the management server 10 because of the preceding processes. Note that step S221 has been described only for confirmation, and this process may be skipped. At the next step S222, the management server 10 checks the authenticity of the milestone data MSⁿ⁻¹ using the function F005, which will be described below. The management server 10 proceeds to step S223 if it is determined that the authenticity of the milestone data MSⁿ⁻¹ has been verified, i.e., a calculation result of the function F005 is successful. The management server 10 proceeds to step S225 if it is determined that the authenticity of the milestone data MSⁿ⁻¹ cannot be verified, i.e., the calculation result of the function F005 is a failure.

At step S223, the management server 10 checks the authenticity of the signature target data Mⁿ⁻²ᵢ to be verified using a function F006, which will be described below. The management server 10 proceeds to step S224 if it is determined that the authenticity of the signature target data Mⁿ⁻²ᵢ has been verified, i.e., a calculation result of the function F006 is successful. The management server 10 proceeds to step S225 if it is determined that the authenticity of the signature target data Mⁿ⁻²ᵢ cannot be verified, i.e., the calculation result of the function F006 is a failure. At step S224, the management server 10 indicates on the display section that the signature target data Mⁿ⁻²ᵢ to be verified is authentic, having been successfully verified, and finishes the authenticity verification process.

At step S225, which is performed if a negative determination is made at either step S222 or step S223, the management server 10 indicates, on the display section, the inability to verify the authenticity of the signature target data Mⁿ⁻²ᵢ to be verified, and finishes the authenticity verification process.

### Details of functions

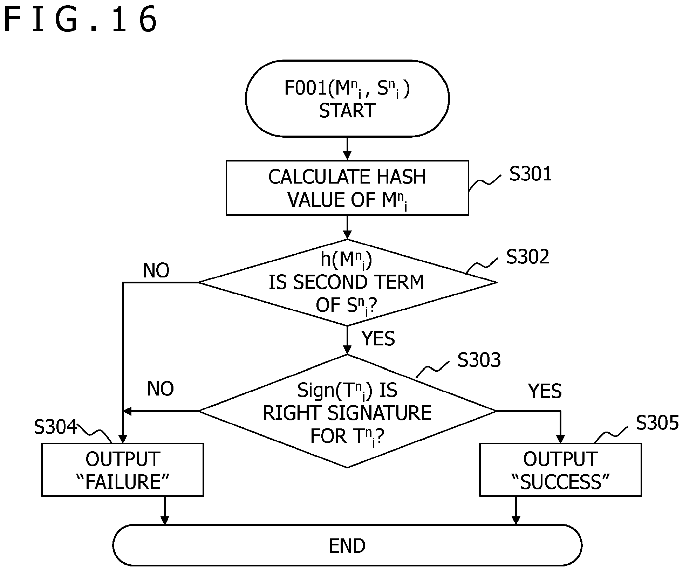

The processes of the functions F001 to F006 will now be described below with reference to FIGS. 16 to 21. It is assumed in the following description that the functions F001 to F006 are executed by the computing device 605 of the management server 10, but it may be understood that the functions F001 to F006 is executed by the signature record generation section 104 or the signature record verification section 107.

FIG. 16 is a flowchart illustrating the process of the function F001. The function F001 is a function for verifying the authenticity of the signature target data Mⁿᵢ, i.e., whether the signature target data Mⁿᵢ has been altered, using the signature target data Mⁿᵢ and the signature record data Sⁿᵢ inputted. In the process of the function F001, the computing device 605 first calculates the hash value of Mⁿᵢ at step S301, and determines whether the hash value h(Mⁿᵢ) coincides with a second term of Sⁿᵢ at the next step S302. Here, the second term of Sⁿᵢ is h(Mⁿᵢ) indicated by reference numeral "812" in FIG. 3. As mentioned above, each of the components of the signature record data Sⁿᵢ has a fixed length, or the components are combined together using a known delimiter, and therefore, it is easy to identify the second term when provided with Sⁿᵢ.

The computing device 605 proceeds to step S304 if it is determined at step S302 that the hash value h(Mⁿᵢ) does not coincide with the second term of Sⁿᵢ, but proceeds to step S303 if it is determined at step S302 that the hash value h(Mⁿᵢ) coincides with the second term of Sⁿᵢ. At step S303, the computing device 605 verifies whether Sign(Tⁿᵢ), which is a third term of Sⁿᵢ, is the right digital signature for the target hash data Tⁿᵢ, which is made up of the first and second terms of Sⁿᵢ, using the corresponding public key. The computing device 605 proceeds to step S304 if it is determined that Sign(Tⁿᵢ) is not the right digital signature for Tⁿᵢ, but proceeds to step S305 if it is determined that Sign(Tⁿᵢ) is the right digital signature.

At step S304, the computing device 605 outputs "failure" to a caller of the function F001, and finishes the process of the function F001. At step S305, the computing device 605 outputs "success" to the caller of the function F001, and finishes the process of the function F001.

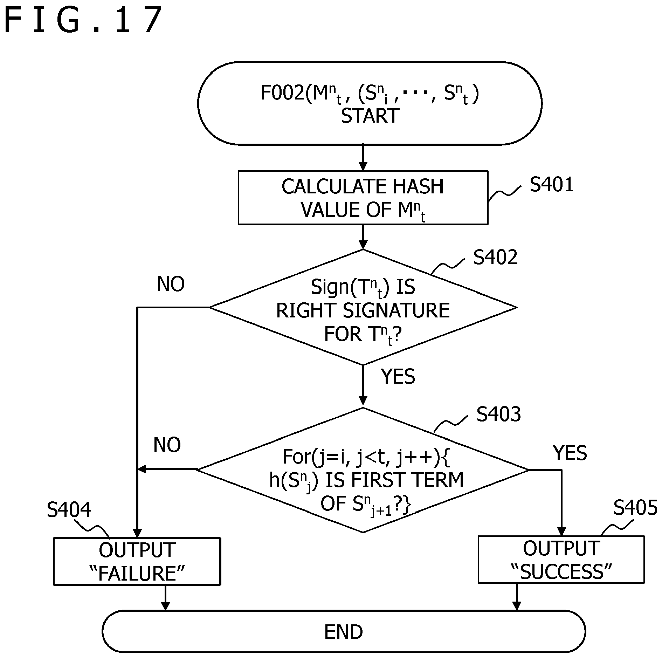

FIG. 17 is a flowchart illustrating the process of the function F002. Trust point data Mⁿₜ and a group of signature record data (Sⁿᵢ, ··· , Sⁿₜ) for the signature target data Mⁿᵢ to the trust point data Mⁿₜ are inputted to the function F002. The function F002 checks the authenticity of the signature record data Sⁿᵢ. In the process of the function F002, the computing device 605 first calculates the hash value of Mⁿₜ at step S401. At the next step S402, the computing device 605 determines whether Sign(Tⁿₜ) is the right digital signature for Tⁿₜ. The computing device 605 proceeds to step S403 if it is determined that Sign(Tⁿₜ) is the right digital signature, but proceeds to step S404 if it is determined that Sign(Tⁿₜ) is not the right digital signature.

At step S403, the computing device 605 checks whether h(Sⁿⱼ) coincides with a first term of Sⁿⱼ₊₁ repeatedly for i ≤ j < t, using a loop counter j. The computing device 605 proceeds to step S405 if it is determined that h(Sⁿⱼ) coincides with the first term of Sⁿⱼ₊₁ for all j, but proceeds to step S404 if it is determined that h(Sⁿⱼ) does not coincide with the first term of Sⁿⱼ₊₁ for at least one j. At step S404, the computing device 605 outputs "failure" to a caller of the function F002, and finishes the process of the function F002. At step S405, the computing device 605 outputs "success" to the caller of the function F002, and finishes the process of the function F002.

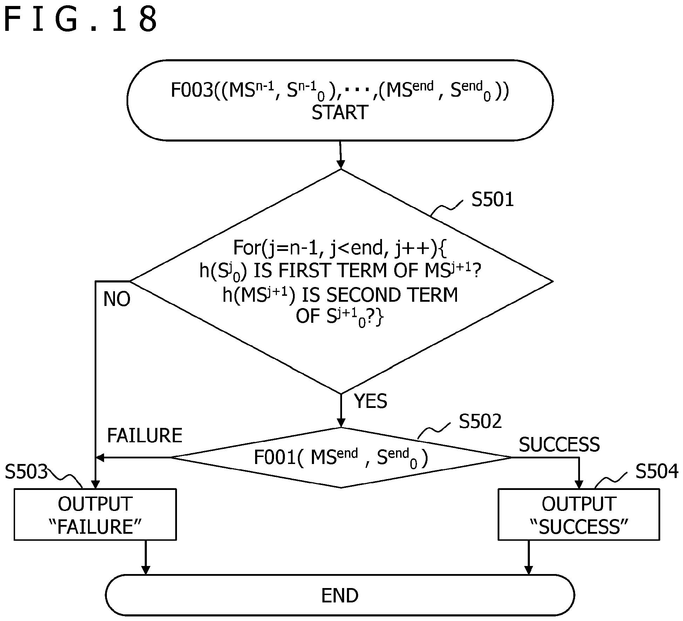

FIG. 18 is a flowchart illustrating the process of the function F003. Pairs ((MSⁿ⁻¹, Sⁿ⁻¹₀), ··· , (MS^{end}, S^{end}₀)) of items of milestone data from the milestone data MSⁿ⁻¹ to the oldest milestone data MS^{end} that is trust data and corresponding items of signature record data are inputted to the function F003. The function F003 checks the authenticity of the signature record data Sⁿ⁻¹₀ using the inputted data.

In the process of the function F003, first at step S501, the computing device 605 checks the following two points repeatedly for n - 1 ≤ j < end, using the loop counter j. A first point is whether h(S^{j}₀) coincides with a first term of MS^{j+1}, and a second point is whether h (MS^{j+1}) coincides with a second term of S^{j+1}₀. The computing device 605 proceeds to step S502 if it is determined that coincidences are found in both the first and second points for all j, but proceeds to step S503 if it is determined that a coincidence is not found in at least one of the first and second points for at least one j .

At step S502, the computing device 605 calls the function F001, calculates F001 (MS^{end}, S^{end}₀) , and assesses a calculation result thereof (step S502). The computing device 605 proceeds to step S504 if it is determined that the calculation result of the function F001 is successful, but proceeds to step S503 if it is determined that the calculation result of the function F001 is a failure. At step S503, the computing device 605 outputs "failure" to a caller of the function F003, and finishes the process of the function F003. At step S504, the computing device 605 outputs "success" to the caller of the function F003, and finishes the process of the function F003.

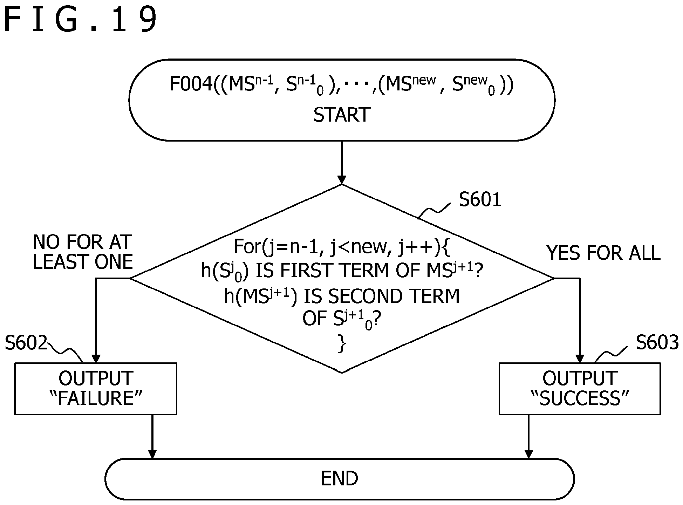

FIG. 19 is a flowchart illustrating the process of the function F004. Pairs of items of milestone data from the milestone data MSⁿ⁻¹ to the latest milestone data MS^{new} and corresponding items of signature record data, i.e., (MSⁿ⁻¹, Sⁿ⁻¹0) , ··· , (MS^{new}, S^{new}₀) , are inputted to the function F004. The function F004 is a function that checks the chain of records from MSⁿ⁻¹ to MS^{new} inputted.

In the process of the function F004, first at step S601, the computing device 605 checks the following two points repeatedly for n - 1 ≤ j < new, using the loop counter j. A first point is whether h(S^{j}₀) coincides with the first term of MS^{j+1}, and a second point is whether h (MS^{j+1}) coincides with the second term of S^{j+1}₀. The computing device 605 proceeds to step S603 if it is determined that coincidences are found in both the first and second points for all j, but proceeds to step S602 if it is determined that a coincidence is not found in at least one of the first and second points for at least one j. At step S602, the computing device 605 outputs "failure" to a caller of the function F004, and finishes the process of the function F004. At step S603, the computing device 605 outputs "success" to the caller of the function F004, and finishes the process of the function F004.

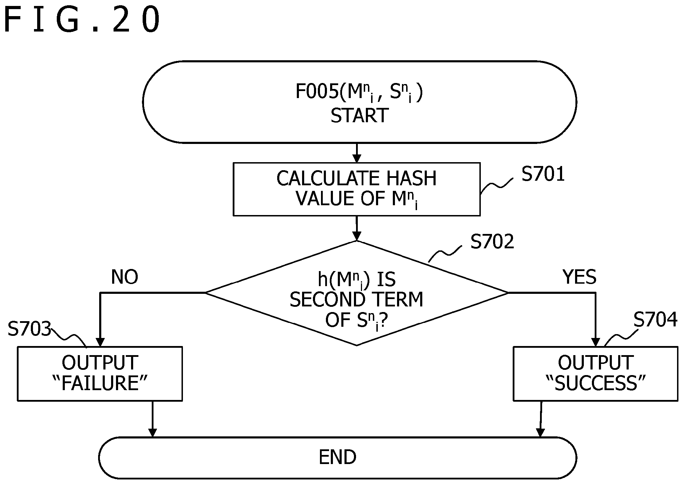

FIG. 20 is a flowchart illustrating the process of the function F005. The signature target data Mⁿᵢ and the signature record data Sⁿᵢ are inputted to the function F005. The function F005 is a function for verifying whether the authenticity of Mⁿᵢ can be guaranteed by Sⁿᵢ. In the process of the function F005, first at step S701, the computing device 605 calculates the hash value of Mⁿᵢ. At the next step S702, the computing device 605 determines whether h(Mⁿᵢ) coincides with the second term of Sⁿᵢ. The computing device 605 proceeds to step S703 if it is determined that h(Mⁿᵢ) does not coincide with the second term of Sⁿᵢ, but proceeds to step S704 if it is determined that h(Mⁿᵢ) coincides with the second term of Sⁿᵢ. At step S703, the computing device 605 outputs "failure" to a caller of the function F005, and finishes the process of the function F005. At step S704, the computing device 605 outputs "success" to the caller of the function F005, and finishes the process of the function F005.

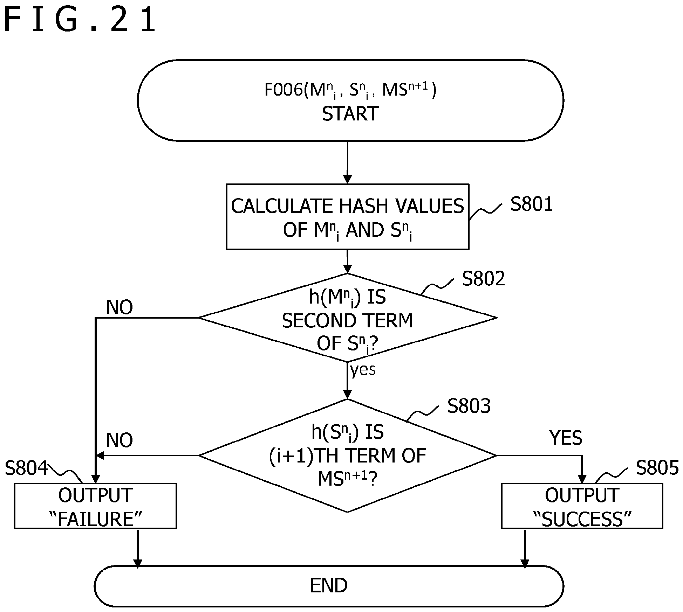

FIG. 21 is a flowchart illustrating the process of the function F006. The signature target data Mⁿᵢ, the signature record data Sⁿᵢ, and the milestone data MSⁿ⁺¹ are inputted to the function F006. The function F006 is a function for verifying whether the authenticity of Mⁿᵢ can be guaranteed by MSⁿ⁺¹. In the process of the function F006, first at step S801, the computing device 605 calculates the hash values of Mⁿᵢ and Sⁿᵢ. At the next step S802, the computing device 605 determines whether h(Mⁿᵢ) coincides with the second term of Sⁿᵢ. The computing device 605 proceeds to step S803 if it is determined at step S802 that h(Mⁿᵢ) coincides with the second term of Sⁿᵢ, but proceeds to step S804 if it is determined at step S802 that h(Mⁿᵢ) does not coincide with the second term of Sⁿᵢ.

At step S803, the computing device 605 determines whether h(Sⁿᵢ) coincides with an (i+1)th term of MSⁿ⁺¹. The computing device 605 proceeds to step S805 if it is determined at step S803 that h(Sⁿᵢ) coincides with the (i+1)th term of MSⁿ⁺¹, but proceeds to step S804 if it is determined at step S803 that h(Sⁿᵢ) does not coincide with the (i+1)th term of MSⁿ⁺¹. At step S804, the computing device 605 outputs "failure" to a caller of the function F006, and finishes the process of the function F006. At step S805, the computing device 605 outputs "success" to the caller of the function F006, and finishes the process of the function F006.

### Effects

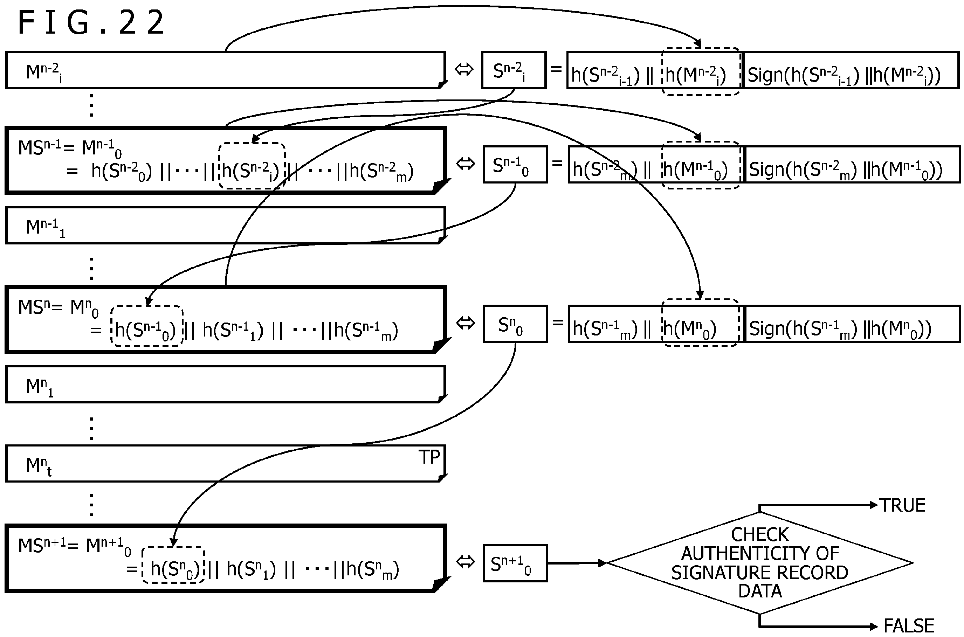

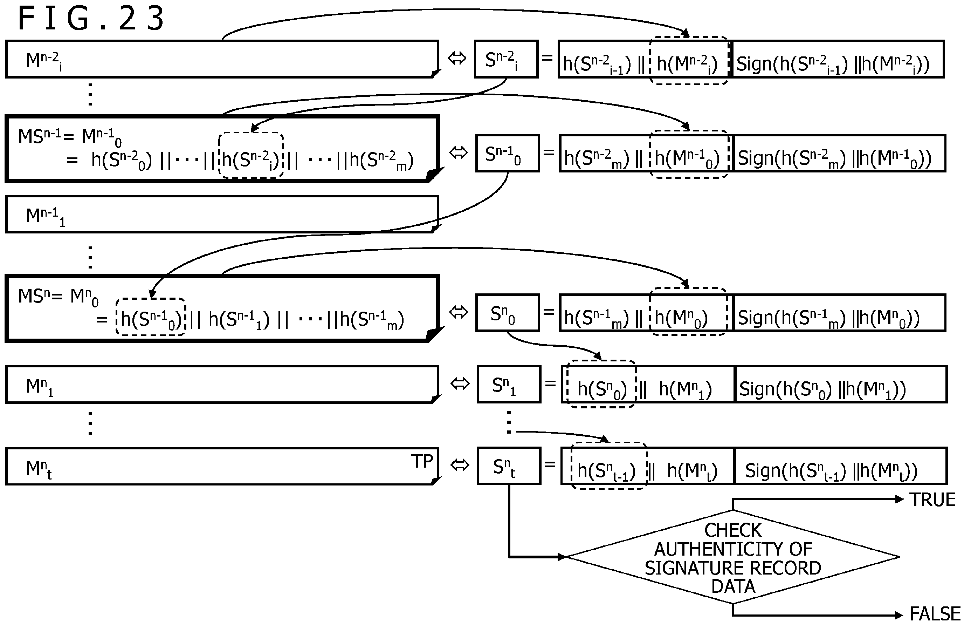

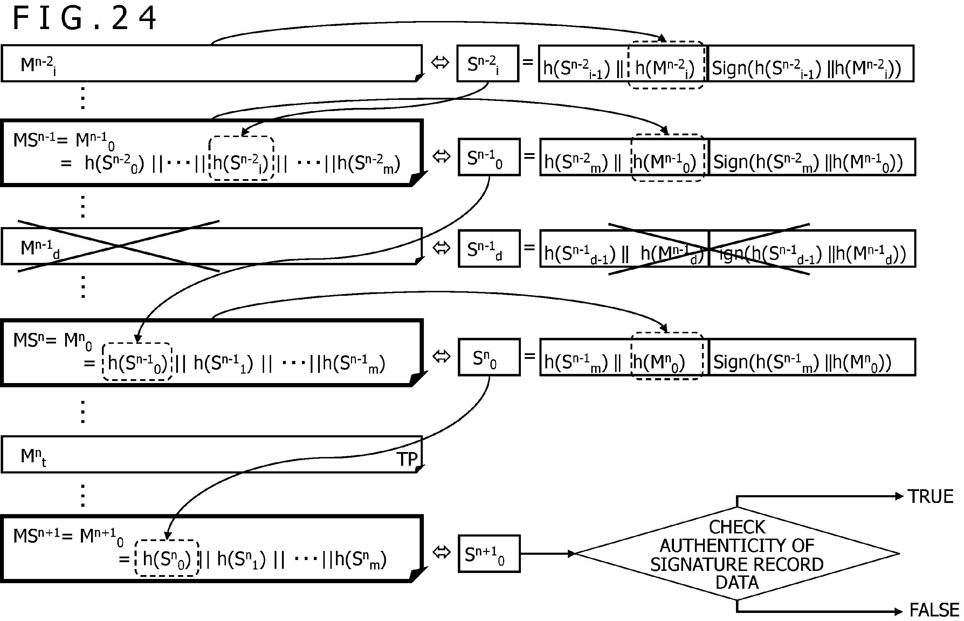

Effects of the present embodiment will be described below with reference to FIGS. 22 to 24. FIGS. 22 and 23 are diagrams specifically illustrating the authenticity verification, and FIG. 24 is a diagram for explaining effects of the present embodiment on the basis of the illustrations of FIGS. 22 and 23.

FIG. 22 is a diagram illustrating validity of the authenticity verification performed when a positive determination has been made at step S206 in FIG. 13. It is assumed in the following description that the oldest milestone data MS^{end} that is trust data is MSⁿ⁺¹. The hash value of the signature target data Mⁿ⁻²ᵢ to be verified exists as a second term of Sⁿ⁻²ᵢ as enclosed by a broken line in the top row in FIG. 22. The hash value of Sⁿ⁻²ᵢ exists as an (i+1)th term of the milestone data MSₙ₋₁, and the hash value of MSⁿ⁻¹ exists as a second term of Sⁿ⁻¹₀. The hash value of Sⁿ⁻¹₀ exists as a first term of the milestone data MSⁿ, and the hash value of MSⁿ exists as a second term of Sⁿ₀. Then, the hash value of Sⁿ₀ exists as a first term of the milestone data MSⁿ⁺¹.

Thus, the milestone data MSⁿ⁺¹ includes a hash value of the signature target data Mⁿ⁻²ᵢ to be verified, the hash value involving repetitive use of hash functions. Therefore, the authenticity of the signature target data Mⁿ⁻²ᵢ to be verified can be verified by verifying the authenticity of the milestone data MSⁿ⁺¹, which is trust data.

FIG. 23 is a diagram illustrating validity of the authenticity verification performed when a negative determination has been made at step S206 in FIG. 13. It is assumed in the following description that the latest milestone data MS^{new} is MSⁿ, and the trust point data is Mⁿₜ. The hash value of the signature target data Mⁿ⁻²ᵢ to be verified exists as a second term of Sⁿ⁻²ᵢ as enclosed by a broken line in the top row in FIG. 23. The hash value of Sⁿ⁻²ᵢ exists as an (i+1)th term of the milestone data MSₙ₋₁, and the hash value of MSⁿ⁻¹ exists as a second term of Sⁿ⁻¹₀. The hash value of Sⁿ⁻¹₀ exists as a first term of the milestone data MSⁿ, and the hash value of MSⁿ exists as a second term of Sⁿ₀. Then, the hash value of Sⁿ₀ exists as a first term of Sⁿᵢ, and the hash value of each subsequent signature record data exists as a first term of the next signature record data until Sⁿₜ is reached.

Thus, target hash data Tⁿₜ of the signature record data Sⁿₜ for the trust point data Mⁿₜ includes a hash value of the signature target data Mⁿ⁻²ᵢ to be verified, the hash value involving repetitive use of hash functions. Therefore, the authenticity of the signature target data Mⁿ⁻²ᵢ to be verified can be verified by verifying that the target hash data Tⁿₜ has not been altered.

FIG. 24 is a diagram for explaining that verification of the authenticity of the signature target data Mⁿ⁻²ᵢ is possible even when signature target data Mⁿ⁻¹_{d} and signature record data Sⁿ⁻¹_{d} have been deleted, with reference to the case where a positive determination has been made at step S206 in FIG. 13. Note that X marks in a third row in FIG. 24 indicate that marked data has been deleted. Note that, although an explanation is omitted, verification of the authenticity is similarly possible even when a negative determination has been made at step S206.

In FIG. 24, the hash value of the signature target data Mⁿ⁻²ᵢ to be verified exists as the second term of Sⁿ⁻²ᵢ. The hash value of Sⁿ⁻²ᵢ exists as the (i+1)th term of the milestone data MSₙ₋₁, and the hash value of MSⁿ⁻¹ exists as the second term of Sⁿ⁻¹₀. The hash value of Sⁿ⁻¹₀ exists as the first term of the milestone data MSⁿ, and the hash value of MSⁿ exists as the second term of Sⁿ₀. Then, the hash value of Sⁿ₀ exists as the first term of the milestone data MSⁿ⁺¹.

Thus, the milestone data MSⁿ⁺¹ includes the hash value of the signature target data Mⁿ⁻²ᵢ to be verified, the hash value involving repetitive use of hash functions, even when any signature target data Mⁿ⁻¹_{d} between items of milestone data and corresponding signature record data Sⁿ⁻¹_{d} have been deleted as illustrated in FIG. 24, and therefore, the authenticity of the signature target data Mⁿ⁻²ᵢ to be verified can be verified by verifying the authenticity of the milestone data MSⁿ⁺¹, which is trust data.

According to the above-described embodiment, the following advantageous effects can be achieved.
(1) A signature management system S, which is a digital signature management system implemented by one or a plurality of computers, includes a signature record generation section 104 configured to generate items of signature record data 80 for items of signature target data 70 inputted in chronological order. The signature record generation section 104 generates an item of milestone data MS as a new item of signature target data 70 every time the number of items of signature target data 70 inputted reaches a predetermined value "m." As illustrated in FIG. 3, each item of signature record data 80 includes a hash value of a corresponding item of signature target data, a hash value of an item of signature target data inputted immediately previously, and a signature for the hash value of the corresponding item of signature target data and the hash value of the item of signature target data inputted immediately previously. Each item of milestone data MS includes a hash value of at least one item of milestone data generated earlier, and hash values of items of signature record data corresponding to all items of signature target data inputted after generation of an immediately previous item of milestone data. Accordingly, even when any signature target data for which the retention term has expired and which no longer needs to be retained and the corresponding signature record data have been deleted, authenticity verification is possible for remaining data that has not been deleted. Specifically, since items of milestone data MS have been generated in the above-described manner, authenticity verification is possible even when any data therebetween has been deleted as illustrated in FIG. 24.
(2) The signature management system S includes a signature record verification section 107 configured to, with respect to to-be-verified signature target data, which is an item of signature target data to be subjected to authenticity verification, check the authenticity of an item of milestone data including a hash value of the to-be-verified signature target data to check the authenticity of the to-be-verified signature target data.
(3) When checking the authenticity of first milestone data, the signature record verification section 107 checks the authenticity of second milestone data, which is another item of milestone data including a hash value of an item of signature record data corresponding to the first milestone data, to check the authenticity of the first milestone data. Accordingly, even when the signature record data corresponding to the first milestone data has expired, the validity of the first milestone data can be checked by checking the authenticity of the second milestone data having an unexpired certificate.

### First modification

In the above-described embodiment, the milestone data is stored in the signature target database 105 of the management server 10. However, the milestone data is a combination of hash values, and therefore does not involve a high risk of confidentiality violation if the hash functions are secure. Therefore, the milestone data may be separately managed in an external server, or may be open to the public.

### Second modification

Components of the signature management system S as described above may be divided or integrated. For example, the signature record generation section 104 and the signature record verification section 107 may be implemented by separate hardware devices. Also, the generation of the milestone data may be performed by a device different from the management server 10.

### Third modification

In the above-described embodiment, the value of "m," which determines the interval at which items of milestone data are generated, is fixed. However, the value of "m" may not be fixed if the value of "m" can be checked afterward.

The configuration of the functional blocks in each of the embodiment and the modifications thereof described above is merely an example configuration. Some functional sections depicted as separate functional blocks may be integrated, or a function described as being implemented by a single functional block may be divided into two or more functions. Also, a part of the function of each functional block may be implemented by another functional block.

Although the program executed in each of the embodiment and the modifications thereof described above has been described as being stored in the nonvolatile storage device 604, the program may alternatively be stored in a rewritable storage device. Alternatively, the program may be loaded as necessary from a nontemporary storage device of another device via the communication device 601 or an input/output interface (not shown) and a usable medium. Here, examples of the medium include a nontemporary storage medium detachably attached to the input/output interface, communication media, e.g., wired, wireless, optical, and other networks, and a carrier wave and a digital signal propagating over such a network. Some or all of the functions implemented by the program may be implemented by a hardware circuit or a field programmable gate array (FPGA).

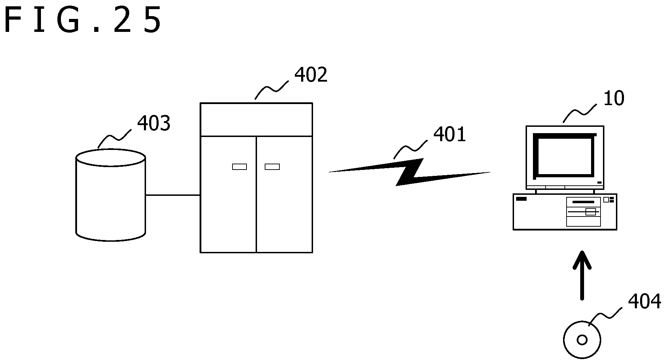

FIG. 25 is a diagram illustrating an example manner in which the program is loaded into the management server 10. The management server 10 may be provided with the program via a nontemporary storage medium, such as, for example, a compact disc read only memory (CD-ROM) 404. Meanwhile, the management server 10 has a capability to be connected to a communication channel 401. A computer 402 is a server computer that provides the above program, and stores the program in a nontemporary recording medium, such as a hard disk 403. Examples of the communication channel 401 include communication channels of the Internet, an online service, and the like, or a dedicated communication channel. The computer 402 reads out the program using the hard disk 403, and transmits the program to the management server 10 through the communication channel 401. Specifically, the program is transmitted as a data signal via a carrier wave through the communication channel 401. As described above, the program can be provided as a computer-readable computer program product in any of various forms, such as a recording medium, a data signal (carrier wave), and the like. The same is true of the other devices, i.e., the application server 20, the management terminal 30, and the auditing terminal 40.

The embodiment and the modifications thereof described above may be combined as appropriate. While various embodiments and modifications have been described above, it should be understood that the present invention is not limited thereto. The scope of the present invention includes other embodiments within the scope of the technical idea of the present invention.

## Claims

1. A digital signature management method implemented by one or a plurality of computers (10, 20, 30, 40), the method comprising:
generating items of signature record data (80) for items of signature target data (70) inputted in chronological order; and
generating an item of milestone data (90) as a new item of signature target data (70) every time the number of items of signature target data (70) inputted reaches a predetermined value, wherein
each item of signature record data (80) includes a hash value (812) of a corresponding item of signature target data (70), a hash value (811) of an item of signature record data (80) inputted immediately previously, and a signature (82) for the hash value (812) of the corresponding item of signature target data (70) and the hash value (811) of the item of signature record data (80) inputted immediately previously, and
each item of milestone data (90) includes a hash value of at least one item of milestone data (90) generated earlier, and hash values of items of signature record data (80) corresponding to all items of signature target data (70) inputted after generation of an immediately previous item of milestone data (90).

2. The digital signature management method according to claim 1, further comprising:
with respect to to-be-verified signature target data (70) being an item of signature target data (70) to be subjected to authenticity verification, checking authenticity of an item of milestone data (90) including a hash value (812) of the to-be-verified signature target data (70) to check the authenticity of the to-be-verified signature target data (70).

3. The digital signature management method according to claim 2, further comprising:
when checking authenticity of first milestone data being a first item of milestone data (90), checking authenticity of second milestone data being another item of milestone data (90) including a hash value of an item of signature record data (80) corresponding to the first milestone data (90) to check the authenticity of the first milestone data (90).

4. A digital signature management system (S) implemented by one or a plurality of computers (10, 20, 30, 40), the system (S) comprising:
a signature record generation section (104) generating items of signature record data (80) for items of signature target data (70) inputted in chronological order, wherein
the signature record generation section (104) generates an item of milestone data (90) as a new item of signature target data (70) every time the number of items of signature target data (70) inputted reaches a predetermined value, wherein
each item of signature record data (80) includes a hash value (812) of a corresponding item of signature target data (70), a hash value (811) of an item of signature record data (80) inputted immediately previously, and a signature (82) for the hash value (812) of the corresponding item of signature target data (70) and the hash value (811) of the item of signature record data (80) inputted immediately previously, and
each item of milestone data (90) includes a hash value of at least one item of milestone data (90) generated earlier, and hash values of items of signature record data (80) corresponding to all items of signature target data (70) inputted after generation of an immediately previous item of milestone data (90).

5. The digital signature management system (S) according to claim 4, further comprising:
a signature record verification section (107), with respect to to-be-verified signature target data (70) being an item of signature target data (70) to be subjected to authenticity verification, checking authenticity of an item of milestone data (90) including a hash value (812) of the to-be-verified signature target data (70) to check the authenticity of the to-be-verified signature target data (70).

6. The digital signature management system (S) according to claim 5, wherein
when checking authenticity of first milestone data being a first item of milestone data (90), the signature record verification section checks authenticity of second milestone data being another item of milestone data (90) including a hash value of an item of signature record data (80) corresponding to the first milestone data (90) to check the authenticity of the first milestone data (90) .

## Patentansprüche

1. Verfahren zur Verwaltung einer digitalen Signatur, das durch einen oder eine Vielzahl von Computern (10, 20, 30, 40) realisiert wird, wobei das Verfahren umfasst, dass:
Elemente von Signaturaufzeichnungsdaten (80) für Elemente von Signaturzieldaten (70), die in chronologischer Reihenfolge eingegeben werden, erzeugt werden; und
ein Element von Meilensteindaten (90) als neues Element von Signaturzieldaten (70) jedes Mal erzeugt wird, wenn die Anzahl an eingegebenen Elementen von Signaturzieldaten (70) einen vorbestimmten Wert erreicht, wobei
jedes Element von Signaturaufzeichnungsdaten (80) einen Hash-Wert (812) eines entsprechenden Elements von Signaturzieldaten (70), einen Hash-Wert (811) eines unmittelbar zuvor eingegebenen Elements von Signaturaufzeichnungsdaten (80) und eine Signatur (82) für den Hash-Wert (812) des entsprechenden Elements von Signaturzieldaten (70) und den Hash-Wert (811) des unmittelbar zuvor eingegebenen Elements von Signaturaufzeichnungsdaten (80) umfasst, und
jedes Element von Meilensteindaten (90) einen Hash-Wert von zumindest einem früher erzeugten Element von Meilensteindaten (90) und Hash-Werte von Elementen von Signaturaufzeichnungsdaten (80), die allen Elementen von Signaturzieldaten (70) entsprechen, die nach einer Erzeugung eines unmittelbar vorherigen Elements von Meilensteindaten (90) eingegeben wurden, umfasst.

2. Verfahren zur Verwaltung einer digitalen Signatur nach Anspruch 1, das ferner umfasst, dass:
in Bezug auf zu verifizierende Signaturzieldaten (70), die ein Element von Signaturzieldaten (70) sind, das einer Authentizitätsverifikation unterzogen werden soll, eine Authentizität eines Elements von Meilensteindaten (90), das einen Hash-Wert (812) der zu verifizierenden Signaturzieldaten (70) umfasst, überprüft wird, um die Authentizität der zu verifizierenden Signaturzieldaten (70) zu überprüfen.

3. Verfahren zur Verwaltung einer digitalen Signatur nach Anspruch 2, das ferner umfasst, dass:
wenn eine Authentizität erster Meilensteindaten, die ein erstes Element von Meilensteindaten (90) sind, überprüft wird, eine Authentizität von zweiten Meilensteindaten, die ein anderes Element von Meilensteindaten (90) sind, das einen Hash-Wert eines Elements von Signaturaufzeichnungsdaten (80) umfasst, die den ersten Meilensteindaten (90) entsprechen, überprüft wird, um die Authentizität der ersten Meilensteindaten (90) zu überprüfen.

4. System (S) zur Verwaltung einer digitalen Signatur, das durch einen oder eine Vielzahl von Computern (10, 20, 30, 40) realisiert ist, wobei das System (S) umfasst:
einen Signaturaufzeichnungserzeugungsabschnitt (104), der Elemente von Signaturaufzeichnungsdaten (80) für Elemente von Signaturzieldaten (70), die in chronologischer Reihenfolge eingegeben werden, erzeugt, wobei der Signaturaufzeichnungserzeugungsabschnitt (104) ein Element von Meilensteindaten (90) als neues Element von Signaturzieldaten (70) jedes Mal erzeugt, wenn die Anzahl an eingegebenen Elementen von Signaturzieldaten (70) einen vorbestimmten Wert erreicht, wobei
jedes Element von Signaturaufzeichnungsdaten (80) einen Hash-Wert (812) eines entsprechenden Elements von Signaturzieldaten (70), einen Hash-Wert (811) eines unmittelbar zuvor eingegebenen Elements von Signaturaufzeichnungsdaten (80) und eine Signatur (82) für den Hash-Wert (812) des entsprechenden Elements von Signaturzieldaten (70) und den Hash-Wert (811) des unmittelbar zuvor eingegebenen Elements von Signaturaufzeichnungsdaten (80) umfasst, und
jedes Element von Meilensteindaten (90) einen Hash-Wert von zumindest einem früher erzeugten Element von Meilensteindaten (90) und Hash-Werte von Elementen von Signaturaufzeichnungsdaten (80), die allen Elementen von Signaturzieldaten (70) entsprechen, die nach einer Erzeugung eines unmittelbar vorherigen Elements von Meilensteindaten (90) eingegeben wurden, umfasst.

5. System (S) zur Verwaltung einer digitalen Signatur nach Anspruch 4, ferner umfassend:
einen Signaturaufzeichnungsverifikationsabschnitt (107), der in Bezug auf zu verifizierende Signaturzieldaten (70), die ein Element von Signaturzieldaten (70) sind, das einer Authentizitätsverifikation unterzogen werden soll, eine Authentizität eines Elements von Meilensteindaten (90), das einen Hash-Wert (812) der zu verifizierenden Signaturzieldaten (70) umfasst, überprüft, um die Authentizität der zu verifizierenden Signaturzieldaten (70) zu überprüfen.

6. System (S) zur Verwaltung einer digitalen Signatur nach Anspruch 5, wobei wenn eine Authentizität erster Meilensteindaten, die ein erstes Element von Meilensteindaten (90) sind, überprüft wird, der Signaturaufzeichnungsverifikationsabschnitt eine Authentizität von zweiten Meilensteindaten, die ein anderes Element von Meilensteindaten (90) sind, das einen Hash-Wert eines Elements von Signaturaufzeichnungsdaten (80) umfasst, die den ersten Meilensteindaten (90) entsprechen, überprüft, um die Authentizität der ersten Meilensteindaten (90) zu überprüfen.

## Revendications

1. Procédé de gestion de signature numérique mis en œuvre par un ou une pluralité d'ordinateurs (10, 20, 30, 40), le procédé comprenant les étapes consistant à :
générer des éléments de données d'enregistrement de signature (80) pour des éléments de données cibles de signature (70) entrés dans l'ordre chronologique ; et
générer un élément de données de jalon (90) en tant que nouvel élément de données cibles de signature (70) chaque fois que le nombre d'éléments de données cibles de signature (70) entrés atteint une valeur prédéterminée,
dans lequel
chaque élément de données d'enregistrement de signature (80) inclut une valeur de hachage (812) d'un élément correspondant de données cibles de signature (70), une valeur de hachage (811) d'un élément de données d'enregistrement de signature (80) entré immédiatement précédemment et une signature (82) pour la valeur de hachage (812) de l'élément correspondant de données cibles de signature (70) et la valeur de hachage (811) de l'élément de données d'enregistrement de signature (80) entré immédiatement précédemment, et
chaque élément de données de jalon (90) inclut une valeur de hachage d'au moins un élément de données de jalon (90) généré plus tôt et des valeurs de hachage d'éléments de données d'enregistrement de signature (80) correspondant à tous les éléments de données cibles de signature (70) entrés après la génération d'un élément de données de jalon (90) immédiatement précédent.

2. Procédé de gestion de signature numérique selon la revendication 1, comprenant en outre l'étape consistant à :
par rapport à des données cibles de signature à vérifier (70) qui sont un élément de données cibles de signature (70) à soumettre à une vérification d'authenticité, contrôler l'authenticité d'un élément de données de jalon (90) incluant une valeur de hachage (812) des données cibles de signature à vérifier (70) pour contrôler l'authenticité des données cibles de signature à vérifier (70).

3. Procédé de gestion de signature numérique selon la revendication 2, comprenant en outre l'étape consistant à :
lors du contrôle de l'authenticité de premières données de jalon qui sont un premier élément de données de jalon (90), contrôler l'authenticité de secondes données de jalon qui sont un autre élément de données de jalon (90) incluant une valeur de hachage d'un élément de données d'enregistrement de signature (80) correspondant aux premières données de jalon (90) pour contrôler l'authenticité des premières données de jalon (90).

4. Système de gestion de signature numérique (S) mis en œuvre par un ou une pluralité d'ordinateurs (10, 20, 30, 40), le système (S) comprenant :
une section de génération d'enregistrement de signature (104) générant des éléments de données d'enregistrement de signature (80) pour des éléments de données cibles de signature (70) entrés dans l'ordre chronologique, dans lequel
la section de génération d'enregistrement de signature (104) génère un élément de données de jalon (90) en tant que nouvel élément de données cibles de signature (70) chaque fois que le nombre d'éléments de données cibles de signature (70) entrés atteint une valeur prédéterminée, dans lequel
chaque élément de données d'enregistrement de signature (80) inclut une valeur de hachage (812) d'un élément correspondant de données cibles de signature (70), une valeur de hachage (811) d'un élément de données d'enregistrement de signature (80) entré immédiatement précédemment et une signature (82) pour la valeur de hachage (812) de l'élément correspondant de données cibles de signature (70) et la valeur de hachage (811) de l'élément de données d'enregistrement de signature (80) entré immédiatement précédemment, et
chaque élément de données de jalon (90) inclut une valeur de hachage d'au moins un élément de données de jalon (90) généré plus tôt et des valeurs de hachage d'éléments de données d'enregistrement de signature (80) correspondant à tous les éléments de données cibles de signature (70) entrés après la génération d'un élément de données de jalon (90) immédiatement précédent.

5. Système de gestion de signature numérique (S) selon la revendication 4, comprenant en outre :
une section de vérification d'enregistrement de signature (107), par rapport à des données cibles de signature à vérifier (70) qui sont un élément de données cibles de signature (70) à soumettre à une vérification d'authenticité, contrôlant l'authenticité d'un élément de données de jalon (90) incluant une valeur de hachage (812) des données cibles de signature à vérifier (70) pour contrôler l'authenticité des données cibles de signature à vérifier (70).

6. Système de gestion de signature numérique (S) selon la revendication 5, dans lequel
lors du contrôle de l'authenticité de premières données de jalon qui sont un premier élément de données de jalon (90), la section de vérification d'enregistrement de signature contrôle l'authenticité de secondes données de jalon qui sont un autre élément de données de jalon (90) incluant une valeur de hachage d'un élément de données d'enregistrement de signature (80) correspondant aux premières données de jalon (90) pour contrôler l'authenticité des premières données de jalon (90).
